(19) Europäisches Patentamt
European Patent Office
Office européen des brevets

(11) Publication number: **0 036 899**
**B1**

(12) # EUROPEAN PATENT SPECIFICATION

(45) Date of publication of patent specification: **01.08.84**

(51) Int. Cl.³: **C 08 L 49/00**, C 08 F 2/46, C 08 F 2/48, C 08 F 38/00, G 01 K 11/16

(21) Application number: **80101651.0**

(22) Date of filing: **27.03.80**

(54) **Thermochromic polyacetylenic composition, process therefor, temperature measuring and indicia displaying devices and process for recording and thereafter erasing images.**

(43) Date of publication of application:
**07.10.81 Bulletin 81/40**

(45) Publication of the grant of the patent:
**01.08.84 Bulletin 84/31**

(84) Designated Contracting States:
**CH DE FR GB IT SE**

(56) References cited:
**FR - A - 2 341 848**
**US - A - 3 501 297**
**US - A - 3 697 297**
**US - A - 3 994 867**
**US - A - 3 999 946**

(73) Proprietor: **ALLIED CORPORATION**
**Columbia Road and Park Avenue P.O. Box 2245R (Law Dept.)**
**Morristown New Jersey 07960 (US)**

(72) Inventor: **Yee, Kwok Chun**
**22 Ash Lane**
**Randolph, New Jersey 07869 (US)**
Inventor: **Preziosi, Anthony Frank**
**7 Moore Street**
**Ledgewood, New Jersey 07852 (US)**
Inventor: **Patel, Gordhanbhai Nathalal**
**31B Mt. Pleasant Village**
**Morris Plains, New Jersey 07950 (US)**
Inventor: **Chance, Ronald Richard**
**21 Davis Avenue**
**Morris Plains, New Jersey 07950 (US)**
Inventor: **Miller, Granville Guy**
**140 Western Avenue**
**Morristown, New Jersey 07960 (US)**
Inventor: **Baughman, Ray Henry**
**41 Glacier Drive**
**Morris Plains, New Jersey 07950 (US)**

(74) Representative: **Baillie, Iain Cameron et al,**
**c/o Ladas & Parry Isartorplatz 5**
**D-8000 München 2 (DE)**

**EP 0 036 899 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

1. Field of the invention

This invention relates to thermochromic polyacetylenes useful in temperature-indicator, indicia-display and laser-writing device applications.

2. Description of the prior art

Examples of organic polymers which evidence thermochromic properties, that is, evidence a reversible change of color with temperature are rare in contrast to photochromic polymers. Poly[dodeca-5,7-diyn-1,12-diol bis(ethylurethane)], called "poly-ETCD", has been observed to change reversibly from green to red in the temperature range of 120° to 140°C, as disclosed in U.S.N.T.I.S., AD Rep. 1974, No. 783709/9GA, from Govt. Rep. Announc. (U.S.) 1974, 74 (21), 51 and G. J. Exarhos, W. M. Risen, Jr., and R. H. Baughman, Journal of American Chemical Society, Vol. 98, pp. 481—487, (1976).

U.S.P. 3,501,297 (Creamens, 1970) describes a mixture of 7,9-hexadecadiyndioic acid and monomethyl ester of 7,9-hexadecadiyndioic acid forming a blue colored image upon electron beam irradiation wherein the blue color can be reversibly converted to a red color by heating above 50°C and returned to the blue color upon cooling to below 50°C.

Certain diacetylenes capable of forming images on exposure to radiation are described in U.S.P. 3,822,134 (1974). Mention is made of stabilizing and fixing the resulting image by heating the irradiated diacetylene to a temperature range, below the melting point, wherein the irradiated image permanently changes color.

U.S.P. 3,999,946 (1976) describes diacetylenes containing at least two conjugated C≡C groups being capable of undergoing irreversible color changes, upon thermal annealing or exposure to radiation, utilized as integral time-temperature history indicators.

U.S.P. 3,723,121 (1973) describes a process for laser beam recording utilizing a chromatic polyacetylenic material containing at least two acetylenic linkages in a conjugated system, such that the material is converted by absorption of incident laser radiation to a color which transmits the incident laser beam wherein no further change takes place. However, the patent does not describe the use of materials which will undergo this process in a reversible manner, to allow storing and thereafter erasing the formed image, which is an important factor in the utility of such materials for laser recording applications.

Journal of Polymer Science, Polymer Letters Edition, Vol. 16 of Nov. 1978, pp. 607—614 (Patel et al.) discloses diacetylenes of the formula,

$$RNHCOO—(CH_2)_n—C{\equiv}C—C{\equiv}C—(CH_2)_n—OOCNHR$$

where n is 3 or 4 and R is $—CH_2—CO_2Z$, with Z=n-butyl or ethyl, as crystalline diacetylene polymers, soluble in chloroform. No mention is made of any thermochromic properties of the compounds.

German Patents 1,940,690 (1971), 1,940,691 (1971) and 1,940,692 (1971) describe the use of compounds such as the phenyl, naphthyl, n-butyl, cyclohexyl, p-tolyl and p-chlorophenyl urethane derivatives of 2,4-hexadiyn-1,6-diol and 3,5-octadiyn-1,8-diol in a process for forming picture-like images, process for preparation of fibrous polymers, and as hardenable materials formed by irradiation, respectively. However, no mention is made of any thermochromic properties which such material may possess.

Summary of the invention

It has now been found that certain acetylenic monomers, specified below, form polymers upon thermal annealing or exposure to radiation which exhibit thermochromic behavior. The thermochromic behavior is unpredictable and has been found to occur in certain narrow classes of polyacetylenic compounds.

In accordance with the present invention there is provided a thermochromic polyacetylene composition selected from the group consisting of

(1) polydiacetylenes obtained by polymerizing monomers having the following formula:

(A) $RNHCOO—(CH_2)_n—C{\equiv}C—C{\equiv}C—(CH_2)_n—OOCNHR'$ wherein

(a) n is 4 and R and R' can be the same or different and are isopropyl, n-octadecyl, linear $C_1—C_4$ p- or m-alkylphenyl, o- or m-chlorophenyl or linear $C_1—C_4$ monochloroalkyl;

(b) n is 3 and R and R' can be the same or different and are linear $C_1—C_4$ m-alkylphenyl, or m- or p-chlorophenyl;

(c) n is 2 and R and R' can be the same or different and are linear $C_1—C_4$ m-alkylphenyl, p-methoxyphenyl or linear $C_1—C_4$ m-alkoxyphenyl;

(2) polyacetylenic network polymers obtained by 1,4-addition of crosslinkable polyacetylenes having the following formulas:

(B) $[OOCNH(CH_2)_6—NHCOO(CH_2)_n—C{\equiv}C—C{\equiv}C—(CH_2)_2—C{\equiv}C—C{\equiv}C—(CH_2)_n]_x$

wherein x is large and n is an integer from 2—6;

(C) $\{OOCNH—(CH_2)_6—NHCOO(CH_2)_n—[C{\equiv}C—C{\equiv}C—(CH_2)_2]_2C{\equiv}C—C{\equiv}C—(CH_2)_n\}_x$

wherein x is large and n is 3; and copolymers formed from monomers of the above formula (B), and formula (C) wherein n is 3;

(3) partially polymerized acetylenic compounds containing from about 0.1 to about 50 weight percent polymer obtained by polymerizing acetylenic compositions having one of the above formulas (A) or (C), or one of formulas D, E or F below; formulas (A) and (C) being rewritten below as (A′) and (C′):

(A′) $RNHCOO(CH_2)_n—C{\equiv}C—C{\equiv}C—(CH_2)n—OOCNHR'$ wherein

(a) n is 4 and R and R′ are p-chlorophenyl or p-bromophenyl;
(b) n is 3 and R and R′ can be the same or different and are linear $C_4$—$C_{18}$ alkyl, linear $C_1$—$C_4$ o-alkoxyphenyl or linear $C_1$—$C_4$ o-alkylphenyl;
(c) n is 2 and R and R′ can be the same or different and are linear $C_2$—$C_{18}$ alkyl, or m-chlorophenyl;
(d) n is 1 and R and R′ can be the same or different and are linear $C_6$—$C_{18}$ alkyl;

(C′) $\{OOCNH—(CH_2)_6—NHCOO(CH_2)_n—[C{\equiv}C—C{\equiv}C—(CH_2)_2]_2C{\equiv}C—C{\equiv}C—(CH_2)_n\}_x$

wherein x is large and is 2 or 4;

(D) $RNHCOO—(CH_2)_n—C{\equiv}C—C{\equiv}C—(CH_2)_2—C{\equiv}C—C{\equiv}C—(CH_2)_n—OOCNHR'$ wherein

(a) n is 4 and R and R′ can be the same or different and are linear $C_1$—$C_{18}$ alkyl;
(b) n is 3 and R and R′ can be the same or different and are linear $C_1$—$C_{18}$ alkyl;
(c) n is 2 and R and R′ can be the same or different and are linear $C_2$—$C_{18}$ alkyl;

(E) $RNHCOO—(CH_2)_n—[C{\equiv}C—C{\equiv}C—(CH_2)_2]_2—C{\equiv}C—C{\equiv}C—(CH_2)_n—OOCNHR'$ wherein

(a) n is 4 and R and R′ can be the same or different and are linear $C_2$—$C_{18}$ alkyl;
(b) n is 3 and R and R′ can be the same or different and are linear $C_1$—$C_{18}$ alkyl;
(c) n is 2 and R and R′ can be the same or different and are linear $C_1$—$C_{18}$ alkyl or phenyl;

(F) $[HO—(CH_2)_n—C{\equiv}C—C{\equiv}C—(CH_2)_2—C{\equiv}C]_2$ wherein n is 2 or 3.

A process is provided for producing thermochromic polyacetylenes which comprises the steps of (1) irradiating a monomer as shown for formula (A), (B), or (C) above with at least about $1 \times 10^3$ J/kg of gamma radiation at room temperature or its equivalent at other temperatures and (2) extracting out unpolymerized monomer from the irradiated polyacetylene. In the preferred embodiments of the invention, monomers (A), (B) and (C) have a signal to 3 for this process. A specific embodiment of this process is provided wherein irradiation is with a dosage of at least 5 Mrads at room temperature, or its equivalent at other temperatures, whereby a relatively low hysteresis transition temperature is obtained.

Also provided is a process for producing thermochromic partially polymerized acetylenic compounds containing from about 0.1 to about 50 weight percent polymer which comprises thermally annealing a monomer as shown above for formulas (A′), (C′), (D), (E), or (F); or irradiating such monomer with ultraviolet radiation or gamma radiation up to a dosage of about 5 Mrads at room temperature, or its equivalent at other temperatures.

Also provided is a device for measuring temperature comprising a substrate having deposited thereon at least one thermochromic polyacetylene of claim 1.

There is further provided a device for displaying indicia comprising a substrate having deposited thereon at least one thermochromic polyacetylene of claim 1, in the form of a symbol.

Further provided is an improvement in a process for recording and thereafter erasing images, wherein a thermochromic layer on a substrate is exposed to a laser beam thereby forming an image by the resulting heating of the thermochromic layer above its thermochromic transition temperature, which improvement comprises forming said layer from at least one thermochromic polyacetylene of claim 1, said thermochromic polyacetylene possessing a hysteresis transition temperature which is at least about 5°C below its thermochromic transition temperature; and maintaining said layer, after exposure, between its thermochromic transition temperature and its hysteresis transition temperature to store the image while recording the same; and thereafter cooling said layer below the hysteresis transition temperature to erase the image.

Brief description of the drawing

Figure 1 illustrates the hysteresis curve of poly-5,7-dodecadiyn-1,12-diol bisethylurethane (poly-ETCD), polymerized by a dosage of $50\times10^4$ J/kg of $Co^{60}$ $\gamma$-radiation. The curve is obtained by plotting temperature vs. absorption edge in electron volts (eV), wherein the absorption edge is the energy value at which the material begins to strongly absorb incident light. An energy value of 0.30 aJ indicates the material appears green gold to the eye and an energy value of 0.35 aJ indicates the material appears red. The curve illustrates that poly-ETCD appears red when heated at 120—130°C, the thermochromic transition temperature, but has to be cooled to about 51°C, the hysteresis transition temperature, in order to reversibly revert to the original green-gold color.

Detailed description of the invention

The thermochromic polyacetylenes of this invention are derived from acetylenic monomers or polymers containing at least one —C≡C—C≡C— group, and the term "thermochromic" as used herein refers to a reversible color change upon heating or cooling which is observed for the polyacetylenes of this invention.

The term polyacetylene as used herein includes polydiacetylenes, polyacetylenic network polymers, and partially polymerized acetylenic compounds.

The term polydiacetylene is used herein to describe polymers produced by 1,4-addition from monomers having formula (A).

The term polyacetylenic network polymer is used to describe the polymers produced from the crosslinkable polyacetylenes of formula (B) and formula (C) wherein n is 3, by an intermolecular 1,4-addition reaction.

Compositions of formulas (B) and (C) which are polymers formed from hexamethylene diisocyanate and the appropriate acetylenic diol, are referred to as crosslinkable polyacetylenes and have values for x of above 1. By the term "crosslinkable" is meant that the polymers contain —C≡C—C≡C— functionality, and can undergo 1,4-addition with other —C≡C—C≡C— functionalities in neighboring polymer chains.

The term partially polymerized acetylenic compounds is used to describe mixtures of monomer and polymer containing up to about 50 weight percent polymer, obtained by polymerizing acetylenic compounds of formula (C'), (D), (E), or (F).

The monomers for producing the polyacetylenes are generally colorless and undergo a color change upon thermal annealing or exposure to radiation. This color change is associated with an intermolecular 1,4-addition polymerization reaction between adjacent —C≡C—C≡C— functionalities. In general, the color change is a progressive process to either red or blue through gradations of shades. At higher conversions (usually above 10%) the red or blue coloration of the polyacetylene will significantly intensify resulting in a dark coloration. The polyacetylene at high conversions may also exhibit a metallic luster.

It has been unexpectedly found that certain polyacetylenes undergo a reversible color change from dark or metallic color to a bright red or orange color at a temperature below their respective melting points. For example, poly[5,7-dodecadiyn-1,12-diol bis(n-octadecylurethane)] undergoes a reversible thermochromic transition from a black-brown color at about 130°C to a bright orange color at 140°C and the cycle can be repeated many times with no apparent degradation of the polymer properties. This thermochromic property is associated with only a few specific types of polyacetylenes and the behavior is generally not predictable.

The observance and measurement of the thermochromic behavior is usually accomplished on any type of conventional melting point apparatus, such as a Fisher-Johns melting point apparatus, having a means for clearly viewing the color change and the thermochromic transition temperature and a means for cooling the heated polyacetylene to complete the thermochromic cycle. The thermochromism may also be monitored using absorption, normal incidence reflection, or diffuse reflectance spectroscopy.

The thermochromic polyacetylenes of this invention can be obtained by polymerization in the solid state by thermal annealing below the melting point of the monomer, or by exposure to actinic radiation. It is preferred to use actinic radiation for the polymerization process such as ultraviolet, electron-beam, alpha-, beta- or gamma-radiation, and the like, and it is particularly preferred to use gamma radiation produced from a $Co^{60}$ source, or ultraviolet radiation.

By the term "solid state" is meant a physical state which can be completely amorphous, substantially crystalline, or amorphous with crystalline regions randomly located within the solid. it is preferred to use a substantially crystalline monomer for producing the thermochromic polyacetylenes, since in general they produce substantially crystalline polyacetylenes which possess optimum thermochromic characteristics. Substantially crystalline polyacetylenes are preferred in the invention.

The thermochromic polyacetylenes of this invention produced by solid state polymerization are either fully polymerized or partially polymerized. By "fully polymerized" is meant that about 50—100% by weight of the monomer has been polymerized and most of the unreacted monomer extracted out from the crystalline polymer by a suitable solvent. In the case of the "partially polymerized" acetylenic compounds, from about 0.1—50 weight percent of the monomer has been polymerized, and the unreacted monomer is not extracted out. Thus, the term "partially polymerized" refers to a mixture of monomer and polymer, containing from about 0.1 to about 50 weight percent of polymer and preferably from about 0.5 to about 10 weight percent polymer.

The partially polymerized acetylenic compounds of this invention are remarkable in that generally the fully polymerized monomer does not exhibit thermochromic properties whereas the unextracted partially polymerized polyacetylene of the same monomer does. For example, partially polymerized 5,7-dodecadiyn-1,12-diol bis(p-bromophenyl-urethane) is thermochromic whereas the fully polymerized monomer is not. However, the reverse is true for [4,6-decadiyn-1,10-diol bis(ethoxycarbonylmethyl-urethane)].

The extent of polymerization is easily determined by extraction of unreacted monomer from the irradiated sample using a suitable solvent for the monomer but a non-solvent for the polymer. The weight of the resulting polyacetylene compared to the weight of starting monomer represents percent of the conversion.

The mechanism for thermochromism is not understood though it is believed to relate in specific fully polymerized materials to changes in crystal packing at the thermochromic transition, which affects the backbone bonding sequence and is not predictable in any straight-forward way. Therefore, thermochromism is not predictable and it cannot be said that a general homologous series of compounds or general isomeric series of compounds will all exhibit the effect. For example, poly-[5,7-dodecadiyn-1,12-diol bis(n-hexylurethane)] is thermochromic, whereas poly-[5,7-dodecadiyn-1,12-diol bis(cyclohexylurethane)] is not. This unexpected thermochromic effect also extends to partially polymerized acetylenes. For example, partially polymerized 4,6-decadiyn-1,10-diol bis(o-tolylurethane) is thermochromic, but partially polymerized 4,6-decadiyn-1,12-diol bis(p-tolylurethane) is not.

To further illustrate the uniqueness and novelty of these compounds, the following is a Table listing by formulas, general classes of polyacetylenes derived by polymerizing monomers of the indicated formulas which include thermochromic and non-thermochromic members.

TABLE I

Fully polymerized polyacetylenes (derived from the following monomers)

(A) $RNHCOO-(CH_2)_n-C{\equiv}C-C{\equiv}C-(CH_2)_n-OOCNHR'$, where R=R'

| Thermochromic-R | n | Non-thermochromic-R |
|---|---|---|
| ethyl (prior art) | 4 | |
| iso-propyl | " | p-bromophenyl |
| n-butyl | " | o-methoxyphenyl |
| n-hexyl | " | cyclohexyl |
| n-octyl | " | cyclopropyl |
| n-dodecyl | " | t-butyl |
| n-octadecyl | " | o-tolyl |
| n-octadecyl/isopropyl | " | p-chlorophenyl |
| ethoxycarbonylmethyl | " | m-methoxyphenyl |
| n-butoxycarbonylmethyl | " | |
| m-tolyl | " | |
| p-tolyl | " | |
| o-chlorophenyl | " | |
| 2-chloroethyl | " | |
| ethoxycarbonylmethyl | 3 | n-hexyl |
| n-butoxycarbonylmethyl | " | n-butyl |
| m-tolyl | " | o-chlorophenyl |
| m-chlorophenyl | " | p-tolyl |
| p-chlorophenyl | " | 2,5-dimethylphenyl |
| | " | p-methoxyphenyl |
| | " | o-methoxyphenyl |
| m-tolyl | 2 | m-nitrophenyl |
| m-methoxyphenyl | " | cyclohexyl |
| p-methoxyphenyl | " | 2,6-dimethylphenyl |
| | " | o-tolyl |
| | " | p-ethoxyphenyl |
| | " | n-hexyl |
| | " | n-butyl |
| | " | 2,5-dimethylphenyl |

Polyacetylene network polymers

(B) $-[OOCNH-(CH_2)_6-NHCOO(CH_2)_n-C{\equiv}C-C{\equiv}C-(CH_2)_2-C{\equiv}C-C{\equiv}C-(CH_2)_n]_x$

| Thermochromic | Non-thermochromic |
|---|---|
| n=2,3,4 | n=1 |

TABLE I (contd.)

(C) —{OOCNH—$(CH_2)_6$|—NHCOO$(CH_2)_n$—[C≡C—C≡C—$(CH_2)_2$]$_2$—C≡C—C≡C—$(CH_2)_n$}$_x$

| Thermochromic | Non-thermochromic |
|---|---|
| n=3 | n=1 |

Partially polymerized acetylenic compounds (derived from the following monomers)
(A′) RNHCOO$(CH_2)_n$—C≡C—C≡C—$(CH_2)_n$—OOCNHR′ where R=R′

| Thermochromic-R | n | Non-thermochromic-R |
|---|---|---|
| p-bromophenyl | 4 | n-hexyl |
| n-butyl | 3 | p-tolyl |
| n-hexyl | " | |
| o-methoxyphenyl | " | |
| o-tolyl | " | |
| ethyl | 2 | cyclohexyl |
| n-butyl | " | |
| n-hexyl | " | |
| n-butoxycarbonylmethyl | " | |
| m-chlorophenyl | " | |
| n-hexyl | 1 | n-butyl |

(D) RNHCOO—$(CH_2)_n$—C≡C—C≡C—$(CH_2)_2$—C≡C—C≡C—$(CH_2)_n$—OOCNHR′ where R=R′

| Thermochromic-R | n | Non-Thermochromic-R |
|---|---|---|
| methyl | 4 | phenyl |
| ethyl | | |
| methyl | 3 | phenyl |
| ethyl | 2 | methyl |

(E) RNHCOO—$(CH_2)_n$—[C≡C—C≡C—$(CH_2)_2$]$_2$—C≡C—C≡C—$(CH_2)_n$—OOCNHR′ where R=R′

| Thermochromic-R | n | Non-Thermochromic |
|---|---|---|
| ethyl | 4 | methyl |
| methyl | 3 | phenyl |
| ethyl | " | |

(F) [HO—$(CH_2)_n$—C≡C—C≡C—$(CH_2)_2$—C≡C]$_2$

| Thermochromic | Non-thermochromic |
|---|---|
| n=2,3 | n=1,4 |

The thermochromic polyacetylene compositions of this invention are selected from the group consisting of the solid state polymerization products of specific sub-classes of the compositions of formulas (A), (B), (C), (D), (E) and (F), as above set out in the Summary of the Invention.

Copolymers of formula (B), and of formula (C) where n=3, are also a subject of this invention. For example, a thermochromic polyacetylene of formula (B) may contain both chain segments where n is 2 and where n is 3. Further included is a thermochromic polyacetylene copolymer containing chain segments of formula (B) where n is 2 and of formula (C) where n is 3. Thus, all copolymers of formula (B) and of formula (C) where n is 3, which are thermochromic after the solid state reaction, are included within the scope of this invention.

The radicals R and R′ can be the same or different. Thermochromic polyacetylene compositions are preferred where R is the same as R′.

Polydiacetylenes of formula (A) wherein n is 4 and R and R′ are the same and are isopropyl, n-octadecyl, or m-tolyl are specific preferred embodiments of this invention since they exhibit very sharp thermochromic color transitions.

Included among the polyacetylene compositions listed in the Summary of the Invention, are specific examples selected from the group consisting of those listed in the following Table II by formula and assigned Roman numerals. The Roman numerals are included as they are used in the Examples below, for convenient reference to specific compounds.

TABLE II

Fully polymerized diacetylenes (derived from the following monomers)

1. Monomers

(A) RNHCOO—$(CH_2)_n$—C≡C—C≡C—$(CH_2)_n$—OOCNHR′

| n | R=R′ | Roman numeral |
|---|---|---|
| 4 | iso-propyl | (I) |
| ″ | n-butyl | (II) |
| ″ | n-hexyl | (III) |
| ″ | n-octyl | (IV) |
| ″ | n-dodecyl | (V) |
| ″ | n-octadecyl | (VI) |
| ″ | R=n-octadecyl, R′=isopropyl | (VII) |
| ″ | ethoxycarbonylmethyl | (VIII) |
| ″ | n-butoxycarbonylmethyl | (IX) |
| ″ | m-tolyl | (X) |
| ″ | p-tolyl | (XI) |
| ″ | o-chlorophenyl | (XII) |
| ″ | 2-chloroethyl | (XIII) |
| 3 | ethoxycarbonylmethyl | (XV) |
| ″ | n-butoxycarbonylmethyl | (XVI) |
| ″ | m-tolyl | (XVII) |
| ″ | m-chlorophenyl | (XVIII) |
| ″ | p-chlorophenyl | (XIX) |
| 2 | m-tolyl | (XX) |
| ″ | m-methoxyphenyl | (XXI) |
| ″ | p-methoxyphenyl | |

Polyacetylene network polymers (derived from the following monomers)

(B) —[OOCNH—$(CH_2)_6$NHOOC$(CH_2)_n$—C≡C—C≡C—$(CH_2)_2$—C≡C—C≡C—$(CH_2)_n]_x$

| n | Roman numeral |
|---|---|
| 4 | (XXII) |
| 3 | (XXIII) |
| 2 | (XXV) |

(C) —{OOCNH—$(CH_2)_6$—NHOOC$(CH_2)_n$—[C≡C—C≡C—$(CH_2)_2]_2$C≡C—C≡C—$(CH_2)_n\}_x$

| n | Roman numeral |
|---|---|
| 3 | (XXVI) |

Partially polymerized acetylenic compounds (derived from the following monomers)

(A′) RNHOOC$(CH_2)_n$—C≡C—C≡C—$(CH_2)_n$—OOCNHR′

| n | R=R′ | Roman numeral |
|---|---|---|
| 4 | p-bromophenyl | (XXVIII) |
| 3 | n-butyl | (XXIX) |
| ″ | n-hexyl | (XXX) |
| ″ | o-methoxyphenyl | (XXXI) |
| ″ | o-tolyl | (XXXII) |
| 2 | ethyl | (XXXIII) |
| ″ | n-butyl | (XXXIV) |
| ″ | n-hexyl | (XXXV) |
| ″ | n-butoxycarbonylmethyl | (XXXVI) |
| ″ | m-chlorophenyl | (XXXVII) |
| 1 | n-hexyl | (XXXVIII) |

(C′) —[OOCNH—$(CH_2)_6$—NHCOO$(CH_2)_n$—[C≡C—C≡C—$(CH_2)_2]_2$C≡C—C≡C—$(CH_2)_n\}_x$

| n | Roman numeral |
|---|---|
| 4 | (XXV) |
| 2 | (XXVII) |

(D) RNHCOO—$(CH_2)_n$—C≡C—C≡C—$(CH_2)_2$—C≡C—C≡C—$(CH_2)_n$—OOCNHR′

| n | R=R′ | Roman numeral |
|---|---|---|
| 4 | methyl | (XLI) |
| ″ | ethyl | (XLII) |
| 3 | methyl | (XLIII) |
| 2 | ethyl | (XLIV) |

TABLE II (contd.)

(E) $RNHCOO-(CH_2)_n-[C\equiv C-C\equiv C-(CH_2)_2-C\equiv C]_2$

| | | |
|---|---|---|
| 4 | ethyl | (XLV) |
| 3 | methyl | (XLVI) |
| " | ethyl | (XLVII) |
| 2 | methyl | (XLVIII) |
| " | ethyl | (XLIX) |
| " | phenyl | (L) |

(F) $[HO-(CH_2)_n-C\equiv C-C\equiv C-(CH_2)_2-C\equiv C]_2$

| | |
|---|---|
| 3 | (LI) |
| 2 | (LII) |

Synthesis of thermochromic polyacetylenes

In order to obtain the thermochromic polyacetylenes of the present invention and in particular to obtain these polymers in high yields, it is usually necessary to obtain acetylenic monomers with precursor crystal phases having suitable molecular packing in the solid state.

Monomers suitable for making the polymers of the invention can be prepared by broadly known methods such as described in U.S.P. 3,999,946, supra. For example, mono- and bisurethane derivatives can be prepared by reacting the corresponding diyn-ol or diyn-diol with a suitable isocyanate. Thus, 5,7-dodecadiyn-1,12-diol-bis(n-octadecyl urethane) (VI) is prepared by reacting 5,7-dodecadiyn-1,12-diol with n-octadecylisocyanate. A catalyst may be added to the reaction mixture to increase the reaction rate to produce the desired acetylenic monomer. Conventional tin catalysts (e.g., dibutyltin-di-2-ethylhexanoate, DBTE), and tertiary amines (e.g., triethylamine, TEA) have been used as catalysts. The reaction mixture may also be warmed as, for example, to about 45° to 55°C to speed up the reaction. Such heating, however, is not required. The desired diyn-ol or diyn-diol can also be prepared by conventional methods. Thus, for example, 5,7-dodecadiyn-1,12-diol is prepared by the oxidative coupling of the corresponding alkyne, i.e., 5-hexyn-1-ol.

Following preparation of the desired monomer, it is generally crystallized from an appropriate solvent, from the melt, or from the vapor so as to provide a solid monomer, preferably in a substantially crystalline phase, which is polymerizable. Suitable solvents employed in a solution crystallization include alkyl esters of monocarboxylic acids, alkyl alcohols, paraffins, olefins, benzenes, alkylated benzenes, ethers, ketones, petroleum ether, halogenated hydrocarbons and water. Representative examples include ethyl acetate, methyl propionate, methanol, ethanol, butanol, isopropanol, hexane, heptane, 1,4-dimethylheptane, toluene, xylene, trimethylbenzene, ethylether, isopropylether, 1,2-dimethoxyethane, tetrahydrofuran, dioxane, acetone, ethylmethyl ketone, chloroform, dichloromethane and trichloromethane and mixtures thereof. Especially preferred as crystallizing solvents are 1,2-dimethoxyethane, dioxane, tetrahydrofuran, petroleum ether, acetone, chloroform, benzene, methanol, ethanol, xylene, ethylacetate and water. Crystallization may, for example, be effected by room temperature evaporation of solutions containing from 0.0001 to 0.5 part, and preferably about 0.002 to 0.2 part by weight of monomer per part by weight of solvent or solvent blend. Alternatively, other conventional crystallization procedures may be used such as by sublimation or by cooling a saturated solution to a sufficiently low temperature (usually at or above room temperature) that the required crystallization occurred.

A process for producing the fully polymerized thermochromic polyacetylenes disclosed herein is also a subject of this invention and comprises the steps of (1) irradiating a monomer of the above formula (A), or (B), or (C) where n is 3, with at least about $1\times10^3$ J/kg of gamma radiation at room temperature or its equivalent at other temperatures and (2) extracting out unpolymerized monomer from the irradiated polyacetylene.

The term "$1\times10^3$ J/kg of gamma radiation at room temperature or its equivalent at other temperatures" indicates that the dosage of gamma radiation required for polymerization will vary with the temperature at which the irradiation is conducted. Higher temperatures will in general require lesser amounts of gamma radiation and conversely, lower temperatures, i.e. below room temperature, will generally require slightly larger amounts of gamma radiation. It is preferred to use a dosage of gamma radiation in the range of about 15 to $100\times10^4$ J/kg, but higher or lower dosages can also be employed.

Extraction of the monomer from the irradiated sample can be accomplished by the use of organic solvents such as dialkyl ethers, alcohols and ketones; representative examples are diethylether, methanol, ethanol, acetone and methylethylketone, acetone being preferred.

A process for producing thermochromic partially polymerized acetylenic compositions containing from about 0.1 to about 50 weight percent polymer is also a subject of this invention, and comprises thermal annealing a monomer of formula (A'), (C') where n is 2 or 4, (D), (E) or (F) or irradiating such monomer with ultraviolet radiation or gamma radiation up to a dosage of about $5\times10^4$ J/kg at room temperature or its equivalent at other temperatures.

Thus, as described above, dosages larger than 5 Mrads are generally required at radiation

temperatures below room temperature, and vice versa since the required dosage of gamma radiation will vary in general with the temperature at which the radiation is conducted. This is with the proviso that no more than about $5 \times 10^4$ J/kg or its equivalent of gamma radiation is used, since higher dosages can lead to highly polymerized materials which are not thermochromic.

Ultraviolet radiation of short or long wavelength can be employed to produce the partially polymerized polyacetylenes. Radiation in the vicinity of 300 nm is most efficient for polymerization. Usually, radiation times of 30 minutes to 16 hours are sufficient to produce the partially polymerized polyacetylenes with a conventional lamp having an intensity of about 6000 microwatts at a distance of 15″ (381 mm) from the source, or its equivalent.

Thermal annealing can also be employed to produce the partially polymerized polyacetylenes and usually a temperature from 20° to 200°C is used. Higher temperatures (below the melting point) of the polymerizing phase are generally preferred over lower temperatures since shorter thermal annealing times are generally required in order to obtain a desired degree of polymerization.

The infrared spectra of the polyacetylenes are essentially identical to those of the monomers, indicating that the polymers possess the same functionality as the monomer. Raman spectral evidence indicates that 1,4-addition reaction has occurred at the —C≡C—C≡C— group within the monomer molecule. The Raman intense vibration, at about 2260 $cm^{-1}$ ($\nu_{C\equiv C}$), which is characteristic of the —C≡C—C≡C— functionality of the monomer, disappears and is replaced by Raman intense vibrations between 1450 and 1540 $cm^{-1}$ and between 2060 and 2140 $cm^{-1}$ in the polymer. X-ray diffraction data indicate that the repeat dimension in the chain direction is approximately 0.49 nm (or a multiple thereof), which confirms the spectral evidence that the polymerization has proceeded by a 1,4-addition reaction.

Hysteresis effect of polyacetylenes

The polyacetylene compositions of this invention as listed in the Summary of the Invention, generally exhibit a hysteresis effect; that is, after inducing the color change by heating above the thermochromic transition temperature, the material must be cooled below and, in some cases, substantially below said transition temperature, to a temperature designated the "hysteresis transition temperature", whereupon the original color reappears. Other polyacetylenes, formed by polymerizing an acetylenic compound containing at least one —C≡C—C≡C— group, also exhibit a hysteresis effect in certain instances. For example, as shown in Fig. 1, the thermochromic transition temperature for poly-5,7-dodecadiyn-1,12-diol bis(ethylurethane) ("poly-ETCD") is about 130°C. This polyacetylene has to be cooled to a temperature of about 51°C, its hysteresis transition temperature, before the original color of the polyacetylene is restored. In general, the hysteresis effect requires cooling to a temperature of about 3° to 80°C below the thermochromic transition temperature in order to restore the original color. The hysteresis temperature is found to be dependent upon the compositions of individual polymers. For example, by contrast, the hysteresis transition temperature for poly-5,7-dodecadiyn-1,12-diol bis(octadecylurethane) is only about 3°C below the thermochromic transition temperature.

In certain embodiments of the thermochromic polyacetylene compositions of this invention, the polyacetylene possesses a hysteresis transition temperature which is at least about 5°C below its thermochromic transition temperature. Such difference of at least 5°C between the thermochromic transition temperature and hysteresis transition temperature is desirable for use in particular applications of temperature-indication, indicia-display devices and laser-writing devices as discussed below.

The hysteresis transition temperature can also be varied, in accordance with this invention, by the radiation dosage used to effect polymerization. Normally, a radiation dosage of at least about 15 to $50 \times 10^4$ J/kg is required to produce a high monomer-to-polymer conversion. The higher dosages will generally produce higher monomer-to-polymer conversion. These larger dosages of radiation produce polyacetylenes having a lower hysteresis transition temperature than obtained using smaller dosages of radiation, even though unreacted monomer is extracted from the polyacetylene in each case. This effect is not understood but probably relates to the higher crystallographic perfection of the polyacetylene achieved at larger dosages of radiation. Thus, for "poly-ETCD" above referred to, the thermochromic transition temperature is about 130°C, after exposure to radiation dosages effective to produce polymerization. If $100 \times 10^4$ J/kg are used to form the polymer, the hysteresis transition temperature is about 28°C. If $50 \times 10^4$ J/kg are used, the hysteresis transition temperature is about 51°C. If $25 \times 10^4$ J/kg are used, the hysteresis transition temperature is about 69°C. Thus, higher dosages of radiation to produce the polyacetylene, producing higher percent conversions of monomer to polymer, will generally result in lower hysteresis transition temperatures; and conversely, small dosages will generally result in higher hysteresis transition temperatures. This technique of varying the hysteresis transition temperature is a general one for thermochromic polyacetylenes that exhibit hysteresis in their thermochromatic behavior.

A specific embodiment of the process for producing thermochromic polyacetylenes comprises irradiating a monomer of formula (A), or (B), or (C) (where n is 3) with gamma radiation of a dosage of at least 15 Mrads at room temperature or its equivalent at other temperatures, whereby a relatively low hysteresis transition temperature is obtained.

Temperature-indicator device utilizing thermochromic polyacetylenes

Thermochromic polyacetylene compositions are useful in temperature measuring devices. Such a device comprises a substrate having deposited thereon at least one thermochromic polyacetylene formed by polymerizing an acetylenic compound containing at least one —C≡C—C≡C— group, which thermochromic polyacetylenic composition possesses a hysteresis transition temperature at least about 5°C below its thermochromic transition temperature. Representative examples of suitable polyacetylenes for use in temperature measuring devices include poly-5,7-dodecadiyn-1,12-diol bis(ethylurethane), poly-5,7-dodecadiyn-1,12-diol bis(n-butylurethane), poly-3,5-octadiyn-1,8-diol bis(p-methoxy-phenylurethane), 5,7,11,13,17,19-tetracosahexayn-1,24-diol, and others as herein described. The thermochromic polyacetylene can be applied to the substrate mixed with a binder, lacquer or other suitable conventional material to adhere the crystals to the substrate. The thermochromic polyacetylene is chosen such that the polymer has a thermochromic transition temperature in the temperature region of interest, e.g. the 130—140°C region, where one could use poly-5,7-dodecadiyn-1,12-diol bis(n-octadecylurethane) which undergoes a color change from brown-black to orange at about 130°C. The substrate which is employed in the device will be chosen with reference to the intended use, and may be such as filter paper, cardboard, a flexible polymer such as polyethylene, polypropylene and the like.

The hysteresis in thermochromic behavior of the polyacetylenes can be used to construct a reversible recording thermometer. Such a device would work in either of two different ways. First, if the hysteresis temperature is well below use temperature and the thermochromic transition temperature is in the temperature rangs to be measured, a color change corresponding to a transition from the low temperature phase to the high temperature phase records that the device has been exposed to a temperature. This response could be erased by cooling the device to below the hysteresis transition temperature. Second, if the thermochromic transition temperature is well above device use temperature and the hysteresis transition temperature is in the measurement range, a color change corresponding to a transition from the high temperature phase to the low temperature phase indicates that the device has been cooled to below the hysteresis temperature. This response could be erased by heating to above the thermochromic transition temperature. For many purposes, in a recording thermometer in accordance with this invention the thermochromic polyacetylene possesses a thermochromic transition temperature of at least about 25°C, and a hysteresis transition temperature which is at least about 5°C below said thermochromic transition temperature.

Given the thermochromic transition temperatures of the polyacetylenes of this invention, one skilled in the art will be able to devise suitable combinations of thermochromic polyacetylene, binder, adhesive, substrates and conventional materials to provide temperature measuring devices for use in desired applications.

Indicia-display device utilizing thermochromic polyacetylenes

The thermochromic polyacetylenes described above are also useful in devices for displaying indicia, comprising a substrate having deposited thereon at least one thermochromic polyacetylene, formed by polymerizing an acetylenic compound containing at least one —C≡C—C≡C— group, in the form of a symbol. This device is similar in principle to the temperature-indicator device described above, except that it displays indicia such as symbols comprising numerals, letters, words and the like and combinations thereof. The difference between this device and the temperature-indicator device is that instead of being uniformly applied (dispersed in a suitable medium containing a binder, lacquer or other suitable conventional vehicle) onto a substrate, the thermochromic composition is painted on a substrate in the form of the particular desired symbol such as a number, letter, word or the like or combinations thereof. The thermochromic polyacetylene is again chosen such that the symbol will appear at a certain predetermined temperature determined by the thermochromic transition temperature of the polyacetylene; and if it is desired to temporarily store the produced colored symbol, use is made of a thermochromic polyacetylene possessing a hysteresis transition temperature no greater than about 5°C below its thermochromic transition temperature. The following example illustrates this device.

Thermochromic polyacetylene (XIV) was incorporated into Halar® 300 (a thermoplastic poly-chlorotrifluoroethylene polymer made by Allied Chemical Corporation) by milling 5 weight percent of the polyacetylene into the polymer at 260°C and then molding into a film at the same temperature. The resulting film was placed over a number, "195°C", written on a double side sticky tape. As the resulting film was black and opaque at room temperature, the number "195°C" was invisible. The tape was then stuck on the hot plate. The hot plate was gradually heated to a temperature of 195°C. The Halar film turned orange color thereby allowing the number "195°C" written on the underlying tape to become visible through the film. When the hot plate was cooled, the Halar film turned back to black and the number "195°C" again became invisible. A number of heating and cooling cycles were run, with the same results.

Other combinations of thermochromic polyacetylenes, binder, adhesive, substrate and conventional materials to use the device in a desired application will be obvious to one skilled in the art.

Process for laser beam recording of images

An improved process for laser beam recording of storable and erasable images is also a subject of this invention, wherein a thermochromic layer on a substrate is exposed to a laser beam thereby forming an image by the resulting localized heating of the thermochromic layer above its thermochromic transition temperature. The present improvement comprises forming said layer from at least one thermochromic composition formed by polymerizing an acetylenic compound containing at least one —C≡C—C≡C— group, especially such composition as herein described, possessing a hysteresis transition temperature which is at least about 5°C below its thermochromic transition temperature; and maintaining said layer, after exposure, between its thermochromic transition temperature and its hysteresis transition temperature to store the image while recording the same; and thereafter cooling said layer below its hysteresis transition temperature to erase the image. Use of a composition having a hysteresis transition temperature 5°C or more, preferably at least 10°C, below its thermochromic transition temperature enables storing the image without danger of overheating while recording the image, or danger of accidentally erasing it by inadvertent cooling through a small temperature interval.

As a specific example, a layer comprising poly-ETCD (above discussed under the heading "Hysteresis Effect of Polyacetylenes") formed by irradiating the ETCD monomer at room temperature with $50 \times 10^4$ J/kg of $\gamma$-radiation, is exposed to a laser beam thereby forming an image which is red. The unexposed portion of the layer is brown-black. By maintaining the temperature of the exposed layer between 130°C, the thermochromic transition temperature, and 51°C, the hysteresis transition temperature, the red image is stored. By lowering the temperature to below 51°C, the image is erased. If poly-ETCD made by irradiating monomer with $100 \times 10^4$ J/kg of gamma radiation is used, the temperature must be lowered to about 28°C, in order to erase the image. Thus, by selecting a thermochromic polyacetylene with a desired thermochromic transition temperature, one skilled in the art will be able to vary the hysteresis transition temperature, by utilizing different dosages of radiation to fit desired applications.

Preparation of the thermochromic polyacetylenes of the present invention and use thereof is illustrated by the following Examples. Parts are by weight unless otherwise indicated.

Example 1

Synthesis of poly-[5,7-dodecadiyn-1,12-diol bis(n-octadecylurethane)] (VI)

A mixture of 40 parts 5,7-dodecadiyn-1,12-diol, 215 parts 1,2-dimethoxyethane, 1 part dibutyltin-di-2-ethylhexanoate and 15 parts triethylamine was prepared and the resulting mixture was stirred vigorously. A solution of 133 parts n-octadecylisocyanate in 44 parts of 1,2-dimethoxyethane was added dropwise over a period of 60 min. The reaction temperature rose to 42°C from 18°C within 50 min and then subsided. After the addition, 80 parts of 1,2-dimethoxyethane was then added to the reaction mixture and the mixture was stirred for an additional 2 hrs. To this mixture was added 1390 parts of heptane. The precipitate was collected by filtration, washed with petroleum ether (bp 30°—60°C) and dried, giving 154.6 parts (99% yield) of desired product, mp 118—119°C. Anal: calculated $C_{50}H_{92}N_2O_4$, C, 76.47%; H, 11.81%; N, 3.57%; found: C, 75.57%; H, 11.65%; N, 3.43%. IR (KBr pellet): 3330 $cm^{-1}$ (N—H stretching), 2920+2850 $cm^{-1}$ (C—H stretching), 1680 $cm^{-1}$ (C=O), 1530 $cm^{-1}$ (N—H bending), 1470 $cm^{-1}$ (C—H), 1260 $cm^{-1}$ (C—O—C stretching). Upon exposure to light, the crystals changed to blue, indicating the compound was solid state polymerizable.

Solid state polymerization

(A) Thermal polymerization

About 0.39 parts of the monomer was melted and then cooled to room temperature. The resulting melt-grown monomer was then heated at 110°C for 15 days, giving rise to a brown-red product. Removal of unreacted monomer residue by extraction with 200 parts of hot dioxane provided 0.09 parts (24% conversion) of orange-red polymer. Upon heating from room temperature to 190°C, this orange-red polymer did not show any color change. Raman: $\nu_{C\equiv C}$=2111+2095 $cm^{-1}$ and $\nu_{C=C}$=1526+1483+1450 $cm^{-1}$.

(B) Gamma-ray induced polymerization

(1) About 0.28 parts of the monomer (crystallized from dioxane) was irradiated with $\gamma$-rays at a dose rate of $1 \times 10^4$ J/kg/hr to a dosage of $50 \times 10^4$ J/kg. The resulting black powder was extracted with 80 parts of hot dioxane to remove unreacted monomer residue, providing 0.18 parts (63% conversion) of orange-red polymer, m.p. 163—175°C. IR (KBr pellet): 3300 $cm^{-1}$ (N—H stretching), 2900+2850 $cm^{-1}$ (C—H stretching), 1680 $cm^{-1}$ (C=0), 1520 $cm^{-1}$ (N—H bending), $1460^{-1}$ (C—H), 1240 $cm^{-1}$ (C—O—C stretching). Raman: $\nu_{C\equiv C}$=2106 $cm^{-1}$, $\nu_{C=C}$=1527+1496+1451 $cm^{-1}$. X-ray, 11% crystalline. Upon heating from room temperature to 160°C, the orange-red polymer did not show any color change.

(2) About 0.67 parts of the monomer (crystallized from 1,2-dimethoxyethane/heptane) was melted and cooled to room temperature. The resulting melt-grown monomer was subjected to $50 \times 10^4$ J/kg of $\gamma$-radiation at a dose rate of $1 \times 10^4$ J/kg/hr. The resulting black material was extracted with 160

parts of hot dioxane to remove unreacted monomer residue, providing 0.51 parts (77% conversion) of black-brown polymer, m.p. 190—200°C. Anal: calculated for $(C_{50}H_{92}N_2O_4)_n$: C, 76.47%; H, 11.81%; N, 3.57%; found: C, 75.20%; 75.14%, H, 11.60%, N, 3.50%, 3.41%. IR (KBr pellet): 3320 $cm^{-1}$ (N—H stretching), 2920+2850 $cm^{-1}$ (C—H stretching), 1650 $cm^{-1}$ (C=O), 1520 $cm^{-1}$ (N—H bending), 1460 $cm^{-1}$ (C—H bending), 1250 $cm^{-1}$ (C—O—C bending). Raman: $\nu_{C\equiv C}$=2076 $cm^{-1}$ and $\nu_{C=C}$=1453 $cm^{-1}$. X-ray: 30% crystalline.

Thermochromism

Tests for thermochromicity were carried visually on a temperature-controlled hot stage. It was noted that the black-brown polymer crystals obtained from the melt-grown monomer evidenced dramatic, reversible color change. The polymer crystals changed to bright orange from black-brown starting at about 130°C and completed the color change at about 140°C. The original color was obtained on cooling. This thermochromic cycle could be repeated many times with no apparent degradation. In addition, this material was also investigated using diffuse reflectance spectroscopy. At the thermochromic phase transition at about 130°C, the absorption peak shifts from 615 nm to 520 nm. The hysteresis for this material was about 3°C. Further investigation showed that another phase of the same polymer also changed from black-brown to orange at 130°C, but upon further heating above 200°C, it showed a sharp change from orange to yellow. If the polymer was then cooled below 200°C, the orange color returned, but not the black-brown color. The polymer was carried through the orange-yellow transformation over many cycles with consistently vivid change in color through the transformation temperature.

This thermochromic polymer was successfully incorporated into both high density polyethylene and a thermoplastic fluorocarbon polymer, sold under the trade designation Halar 300 by Allied Chemical Corporation, without modifying the thermochromic behavior. A film of a mixture of 5% thermochromic polymer in 95% Halar 300 exhibited a dramatic reversible color change from reddish-orange to yellow over many cycles in the range 190—200°C. However, if the film was heated overnight at 230°C, the yellow color became permanent.

Example 2

Synthesis of poly-[5,7-dodecadiyn-1,12-diol bis(n-dodecylurethane)] (V)

Following the procedure of Example 1, 7.0 parts of 5,7-dodecadiyn-1,12-diol and 17.4 parts of n-dodecylisocyanate were reacted in the presence of 0.15 part dibutyltin-di-2-ethylhexanoate, 2.2 parts of triethylamine and 173 parts of 1,2-dimethoxyethane. After stirring at room temperature for 16 hrs, 410 parts of heptane was added to the reaction mixture. The precipitate was collected by filtration, washed with heptane and dried, resulting in 20 parts (90% yield) of powdery monomer, mp 115.8—116.6°C. IR (KBr pellet): 3300 $cm^{-1}$ (N—H stretching), 2910+2840 $cm^{-1}$ (C—H stretching), 1670 $cm^{-1}$ (C=O), 1520 $cm^{-1}$ (N—H bending), 1460 $cm^{-1}$ (C—H bending), 1260+1240+1220 $cm^{-1}$ (C—O—C).

About 0.28 parts of the powdery monomer was subjected to $50\times10^4$ J/kg of $\gamma$-radiation at a dose rate of $1\times10^4$ J/kg/hr. The resulting irradiated sample (purple colored) was extracted with 200 parts of dioxane at 40°C for 1 hr to remove any non-polymerized monomer, yielding 0.20 parts (72% conversion) of dark-purple polymer (IIA), m.p. 177°—180°C. Anal. Calc'd for $(C_{38}H_{68}N_2O_4)_x$: C, 74.01%; H, 11.11%; N, 4.54%. Found: C, 72.91%; H, 10.95%; N, 4.43%. IR (KBr pellet): 3300 $cm^{-1}$ (N—H stretching), 2900+2840 $cm^{-1}$ (C—H stretching), 1680 $cm^{-1}$ (C=O), 1520 $cm^{-1}$ (N—H bending), 1460 $cm^{-1}$ (C—H bending), 1260+1240 $cm^{-1}$ (C—O—C). Raman: $\nu_{C\equiv C}$=2075 $cm^{-1}$ and $\nu_{C=C}$=1451 $cm^{-1}$. X-ray anal: 29% crystalline. Upon heating on a temperature-controlled hot stage, the polymer crystals were observed to exhibit thermochromic behavior. At 120°C the polymer is purple and at 160°C it is red.

In a separate run, 0.52 parts of melt-grown monomer was exposed to $50\times10^4$ J/kg of $\gamma$-radiation at a dose rate of $1\times10^4$ J/kg/hr. The resulting irradiated sample (purple colored) was extracted with 200 parts of dioxane at 50°C for 1 hr to remove any unpolymerized monomer, providing 0.49 parts (94% conversion) of dark purple polymer (V), m.p. 180°—190°C. IR (KBr pellet): 3300 $cm^{-1}$ (N—H stretching), 2900+2840 $cm^{-1}$ (C—H stretching), 1670 $cm^{-1}$ (C=O), 1520 $cm^{-1}$ (N—H bending), 1460 $cm^{-1}$ (C—H bending), 1250 $cm^{-1}$ (C—O—C). X-ray anal: 35% crystalline. Raman: $\nu_{C\equiv C}$=2076+2106 (sh) $cm^{-1}$ and $\nu_{C=C}$=1451+1490 (sh) $cm^{-1}$. Anal. Calc'd for $(C_{38}H_{68}N_2O_4)_x$: C, 74.01%; H, 11.11%; N, 4.54%; found: C, 73.26%; H, 11.12%; N, 4.57%. Upon heating on a temperature-controlled hot stage, the polymer crystals were observed to exhibit thermochromic phenomena between 120° and 160°C similar to that described above.

Example 3

Synthesis of poly-(5,7-dodecadiyn-1,12-diol n-octadecyl-isopropylbisurethane) (VII)

A mixture of 40 parts of methanol, 0.2 part hydroxylamine hydrochloride, 0.2 part cuprous chloride, 18.3 parts 5-hexyn-1-ol isopropylurethane, 17 parts water and 14 parts 70% ethylamine was prepared and the contents were stirred and kept under a nitrogen blanket. About 12.5 parts 6-bromo-5-hexyn-1-ol were added dropwise to the mixture over a period of about 30 minutes at a temperature

range of about 35° to 40°C. An exotherm which developed during the addition was controlled with cooling. After the addition was completed, the contents were stirred at 35° to 37°C for about 45 minutes, and 0.6 part potassium cyanide was added. The contents were mixed with 100 parts water and then extracted with ether. The ether extracts were dried and concentrated under reduced pressure yielding 23.5 parts of a viscous yellow liquid which was 5,7-dodecadiyn-1,12-diol monoisopropylurethane.

Following the general procedure of Example 1, the above-formed dodecadiyn-ol-isopropylurethane was reacted with n-octadecylisocyanate to form 5,7-dodecadiyn-1,12-diol n-octadecylisopropylbisurethane (VII) which had a melting point of 105—108°C. The material was recrystallized from acetone to yield a blue powder with melting point 110—111°C. The brown-black powder, which was obtained by irradiating the n-octadecyl-isopropyl-bisurethane of 5,7-dodecadiyn-1,12-diol with $50\times10^4$ J/kg of $\gamma$-radiation, exhibited thermochromic behavior after the as-polymerized material was extracted with acetone. The thermochromic behavior was evidenced on a Fisher-Johns melting point apparatus in which the thermochromic transition from a brown-black to a dark red was observed at 180—205°C. This color change was reversible over many cycles observed for the polymer.

Examples 4—19

Utilizing the general procedure of Example 1, the following thermochromic polydiacetylenes were prepared, as tabulated in Table III. The appropriate diols and isocyanates used to prepare the monomer are listed. In some instances the monomers obtained were crystallized, either from the melt or from solution in a solvent such as ethyl acetate or acetone/hexane. The mode of polymerization was either by thermal annealing or by gamma radiation. Where gamma radiation was employed, the conditions used were a dosage of 50 Mrad delivered at a rate of $1\times10^4$ J/kg/hr. Generally after polymerization, the product was extracted with boiling dioxane or acetone to remove unreacted monomer. Color of the polymer after extraction, percent conversion values, and melting points are also given for each thermochromic polymer in Table IV. Unless otherwise indicated, the Raman spectral bands for each polymer are in the region of about $\nu_{C\equiv C}$=2060 to 2140 $cm^{-1}$ and $\nu_{C=C}$=1450 to 1540 $cm^{-1}$ and unless otherwise indicated, the infrared spectrum of the monomer was substantially the same as for the resulting polymer.

TABLE III

| Ex. | Polymer | Starting materials<br>Diyndiol | Isocyanate |
|---|---|---|---|
| 4 | (I) | 5,7-dodecadiyn-1,12-diol | isopropyl |
| 5 | (II) | " | n-butyl |
| 6 | (IIIA)* | " | n-hexyl |
| 7 | (IIIb) | " | " |
| 8 | (IVA)* | " | n-octyl |
| 9 | (IVB) | " | " |
| 10 | (X) | " | m-tolyl |
| 11 | (XI) | " | p-tolyl |
| 12 | (XII) | " | o-chlorophenyl |
| 13 | (XIII) | " | 2-chloroethyl |
| 14 | (XVI) | 4,6-decadiyn-1,10-diol | m-tolyl |
| 15 | (XVII) | " | m-chlorophenyl |
| 16 | (XVIII) | " | p-chlorophenyl |
| 17 | (XIX) | 3,5-octadiyn-1,8-diol | m-tolyl |
| 18 | (XX) | " | m-methoxyphenyl |
| 19 | (XXI) | " | p-methoxyphenyl |

*Polymers IIIA and IVA were not recrystallized; IIIB and IVB were crystallized from the melt.

TABLE IV

| Polymer | Color | % Conversion | m.p. °C<br>Polymer |
|---|---|---|---|
| I | dark green-gold | 99 | 230—240 |
| II | " | 96 | 230—250 |
| IIIA | " | 64 | 201—203 |
| IIIB | " | 75 | 199—201 |
| IVA | green-gold | 61 | 196—199 |
| IVB | gold | 90 | 194—199 |
| V | dark purple | 94 | 180—190 |
| VI | brown-black | 77 | 190—200 |
| VII | brown-black | 88 | 195—208 |

TABLE IV (contd.)

| | | | Monomer |
|---|---|---|---|
| X | metallic green-gold | 98 | 110 |
| XI | green-gold | 97 | 163 |
| XII | " | 96 | 102 |
| XIII | " | 96 | 106 |
| XVI | " | 93 | 93 |
| XVII | dark | 100 | 95 |
| XVIII | green-gold | 98 | 150 |
| XIX | dark | 92 | 136 |
| XX | dark | 96 | 141 |
| XXI | dark | 97 | 206 |

Example 20

Synthesis of 5,7,11-dodecatriyn-1-ol (precursor for $C'F_4$ diol) and 5,7,11,13-octadecatetrayn-1,18-diol ($BD_4$ diol)

The term, $C'F_4$ diol, refers to the diol used to make the urethane derivatives of formula (C') and diol of formula F where in each case n=4 and the term, $BD_4$ diol, refers to the diol used to make the urethane derivatives of formulas (B) and (D) where in each case n=4.

A mixture of 60 parts methanol, 0.15 part cuprous chloride, 40 parts 70% ethylamine in aqueous solution and 1.5 parts of hydroxylamine hydrochloride was prepared. After stirring the contents a short time, 10.9 parts 1,5-hexadiyn was added in one portion. The contents were cooled to 15°C, and 25.0 parts 6-bromo-5-hexyn-1-ol in 16 parts methanol were added dropwise over a period of 20 minutes while maintaining the temperature between 15° and 25°C. After stirring for 4 hours the solvent was removed leaving a dark viscous layer. The triyn-ol was extracted from the reaction mixture by adding 240 parts of petroleum ether (60°—110°C boiling range) to the reaction mixture, and heating and stirring and decanting the top layer of the mixture. The extraction was repeated twice, and the petroleum ether solutions were refrigerated at −26°C. The product formed was a white viscous layer on the bottom of the petroleum ether which was isolated by decanting off the petroleum ether and which was subsequently used for forming the $C'F_4$ diol in Example 21.

The tetrayn-diol ($BD_4$ diol) was isolated by adding 50 parts glacial acetic acid to the remaining portion of the reaction contents, heating, and adding 150 parts of hot water while stirring, after which the contents were refrigerated at −8°C. The product $BD_4$ diol, crystallized out, was isolated by filtering and then purified by dissolving in 280 parts hot xylene and refrigerating the xylene extract at −8°C. After crystallization and filtration, the product was washed with petroleum ether and dried in a vacuum oven in the dark, to yield 7.5 parts of final product ($BD_4$ diol), light in color and fluffy in texture. The melting point of the tetrayn-diol ($BD_4$ diol) was 118.8° to 121.4°C.

Example 21

Preparation of 5,7,11,13,17,19-tetracosahexayn-1,2,4-diol ($C'F_4$ diol)

A mixture of 2 parts cuprous chloride, 12 parts methanol, and 4 parts N,N,N',N'-tetramethylethylenediamine was prepared. To this mixture was added 5,7,11-dodecatriyn-1-ol, produced in Example 20, dissolved in 12 parts methanol over a period of 15 minutes while oxygen was moderately bubbled through the reaction contents. After 1 hour, oxygen flow was stopped and the methanol was distilled leaving a semi-viscous residue. To this was added 100 parts of 3N hydrochloric acid while stirring, causing product to precipitate. It was collected by filtration, washed once with 25 parts 2N hydrochloric acid and several times with water. The solid was dissolved in 200 parts xylene and the solution was refrigerated at −8°C. Subsequent crystallization and filtration yielded 6.0 parts of fluffy product, $C'F_4$ diol, which turns blue in daylight. The melting point of the material was 101.0° to 104.1°C.

Example 22

Synthesis of 4,6,10,12-hexadecatetrayn-1,16-diol ($BD_3$ diol), and 4,6,10-undecatriyn-1-ol (precursor for $CF_3$ diol)

The term $BD_3$ diol refers to the diol used to make urethane derivatives of formulas (B) and (D) where in each case n=3, and the term $CF_3$ diol refers to the diol used to make urethane derivatives of formula (C) and diol of formula (F) where in each case n=3. Following the general procedure of Example 20 but utilizing 5-bromo-4-pentyn-1-ol (instead of 6-bromo-5-hexyn-1-ol), 4,6,10,12-hexadecatetrayn-1,16-diol ($BD_3$ diol) was obtained having a melting point of 126.5 to 127.8°C. Also produced from the reaction was 4,6,10-undecatriyn-1-ol, used to make $CF_3$ diol in Example 23.

Example 23

Synthesis of 4,6,10,12,16,18-docosahexayn-1,22-diol ($CF_3$ diol)

Following the general procedure of Example 21, the triyn-ol produced in Example 22 was

converted to 4,6,10,12,16,18-docosahexayn-1,22-diol ($CF_3$ diol). This material is also a thermochromic polyacetylene of this invention having the Roman numeral LI, and is the thermochromic polymer of formula (F) where n=3. The melting point of the desired hexayn-diol (LI) was 189.8 to 191.4°C.

Example 24

Synthesis of 3,5,9,11-tetradecatetrayn-1,14-diol ($BD_2$ diol) and 3,5,9-decatriyn-1-ol (precursor for $C'F_2$ diol)

The term $BD_2$ diol refers to the diol used to make urethane derivatives of formulas (B) and (D) where in each case n=2 and the term $C'F_2$ diol refers to the diol used to make urethane derivatives of formula (C'), and diol of formula (F) where in each case n=2.

Following the procedure of Example 20 but utilizing 4-bromo-3-butyn-1-ol instead of 6-bromo-5-hexyn-1-ol, the above 3,5,9,11-tetradecatetrayn-1,14-diol ($BD_2$ diol) was prepared yielding a white polymer which turns red purple in daylight. The melting point was 151.2—152.2°C. Also produced from the reaction was 3,5,9-decatriyn-1-ol which crystallized as white flakes m.p. 50.2—50.6°C, which change to red slowly. This product was used to make $CF_2$ diol in Example 25.

Example 25

Synthesis of 3,5,9,11,15,17-eicosahexayn- 1,20-diol ($C'F_2$ diol).

Following the general procedure of Example 23, the trinyool produced in Example 24 was converted to 3,5,9,11,15,17-eicosahexayn-1,20-diol ($C'F_2$ diol). This material is also a thermochromic polyacetylene of this invention having the assigned Roman numeral LII and is the thermochromic polymer of formula (F) where n=2. No melting point of the product was obtained since it polymerized during heating. The white powdery polymer (LII) which was obtained from the reaction slowly turns blue purple in daylight.

Example 26

Synthesis of poly-[5,7,11,13-octadecatetrayn-1,18-diol hexamethylene diurethane] (XXII)

In a reaction vessel 1.35 parts $BD_4$ diol produced from Example 20 was reacted with 0.84 parts hexamethylene diisocyanate in 70 parts tetrahydrofuran at room temperature for 2 hours in the presence of a catalytic amount of DBTE and TEA (identified under the heading "Synthesis of Thermochromic Polyacetylenes", above). The desired product, XXII, was collected by filtration, washed, and vacuum dried resulting 1.9 parts of a fine fluffy off-white powder, melting point 160.6 to 165.4°C.

Examples 27—28

Following the general procedure of Example 26, XXIII was prepared from $BD_3$ diol and hexamethylene diisocyanate to yield a light tan product having a melting point of 165.8 to 168.8°C; and XXIV was prepared from $BD_2$ diol and hexamethylene diisocyanate yielding a white fluffy material which did not melt below 300°C.

Example 29

Synthesis of poly[5,7,11,13,17,19-tetracosahexayn-1,24-diol hexamethylene diurethane] (XXV)

In a reaction vessel 1.73 parts $C'F_4$ diol produced from Example 21 was reacted with 0.84 parts hexamethylene diisocyanate in 70 parts of tetrahydrofuran at room temperature for 4 hours in the presence of a catalytic amount of DBTE and TEA (see Example 26). The product was precipitated with heptane and filtered. After washing several times with heptane, it was vacuum dried to yield 1.7 parts of XXV, a light tan fluffy material, melting point, 161.3 to 165.1°C.

Examples 30—31

Following the general procedure in Example 29, XXVI was prepared from $CF_3$ diol and hexamethylene diisocyanate yielding a white product which turns blue slowly, which did not melt up to 300°C; and XXVII was prepared from $C'F_2$ diol and hexamethylene diisocyanate which did not melt up to 300°C.

The compositions XXII to XXVII, excluding compositions XXV and XXVII, in Examples 26—31 were irradiated with $15\times10^4$ J/kg of gamma radiation or long wave ultraviolet radiation for times of 30 minutes to 16 hours at a distance of 10″ (254 mm) from the source, wherein the UV source had an intensity of about 6000 microwatts at 15′ (381 mm), followed by extraction with acetone to yield the thermochromic polyacetylene network polymers of this invention. Compositions XXV and XXVII were irradiated with the ultraviolet source described above for shorter times producing thermochromic partially polymerized polyacetylenes. The fully polymerized materials were non-thermochromic.

Examples 32—44

The following Examples illustrate partially polymerized acetylenic compounds which are formed by reacting a diyn-diol with an isocyanate as described in Examples 1 and 2, and then polymerizing the resulting monomer (crystallized from acetone/hexane) by thermal annealing at room temperature for about 2—3 months. The resulting partially polymerized acetylenic compounds were not extracted

following thermal annealing. In general, the percent conversion of the polymers in the polymerizations is about 0.1 to about 10%. Melting points of the starting monomers are included in the Examples were appropriate.

TABLE V

| Partially polymerized acetylenic compounds | Diol | Isocyanate | m.p. °C |
|---|---|---|---|
| XXVIII | 5,7-dodecadiyn-1,12-diol | p-bromophenyl | 155 |
| XXIX | 4,6-decadiyn-1,10-diol | n-butyl | 110 |
| XXX | " | n-hexyl | 112 |
| XXXI | " | o-methoxyphenyl | 117 |
| XXXII | " | o-tolyl | 254 |
| XXXIII | 3,5-octadiyn-1,8-diol | ethyl | — |
| XXXIV | " | n-butyl | 156 |
| XXXV | " | n-hexyl | 149 |
| XXXVII | " | m-chlorophenyl | 143 |
| XXXVIII | 2,4-hexadiyn-1,6-diol | n-hexyl | 84 |

Example 45

Synthesis of 5,7,11,13-octadecatetrayn-1,18-diol-bismethylurethane (XLI)

Following the general procedure of Example 1, 1.3 parts $BD_4$ diol, 40 parts tetrahydrofuran, 1.14 parts of methyl isocyanate, 0.2 parts DBTE, 4 parts TEA (see Example 26) were mixed together and allowed to react at room temperature for 1.5 hours. The product was precipitated by the addition of 175 parts n-hexane and was filtered and washed several times with additional n-hexane. After drying, 1.8 parts of product, XLI, was obtained, giving a conversion of 93.8% of light tan fluffy material. The product was dissolved in 40 parts hot acetone followed by 40 parts hot petroleum ether and refrigerated at —8°C to crystallize it. The isolated product was a light tan fluffy powder having a melting point 165.4° to 166.6°C.

Examples 46—48

Following the above general procedure of Example 45, the following urethanes were prepared utilizing the designated diol and isocyanate starting materials.

TABLE VI

| No. | Diol | Isocyanate | Melting point (°C) |
|---|---|---|---|
| XLII | $BD_4$ | Ethyl | 152.2 to 153.9 |
| XLIII | $BD_3$ | Methyl | 173.0 to 174.1 |
| XLIV | $BD_2$ | Ethyl | 208.0 to 209.1 |

Example 49

Synthesis of 5,7,11,13,17,19-tetracosahexayn-1,24-diol bisethylurethane (XLV)

Following the general procedure of Example 1, 1.3 parts $C'F_4$ diol, 40 parts tetrahydrofuran, 1.42 parts ethyl isocyanate, 0.2 parts DBTE, and 4 parts TEA (see Example 26) were mixed together and allowed to react at room temperature for 1.5 hours. The product was precipitated by the addition of 175 parts n-hexane and was quickly filtered and washed several times with additional n-hexane. After drying, 2.3 parts of product XLV was obtained representing a 95.8% conversion. The product had a fluffy texture; it changes blue very rapidly when exposed to daylight. The product was recrystallized by dissolving in 40 parts hot acetone followed by 20 parts hot petroleum ether. The precipitate turned blue during crystallization at about —8°C. The melting point of the material was 146.4° to 148.8°C.

Examples 50 to 54

Following the general procedure of Example 49, the following urethanes were prepared in like manner.

TABLE VII

| Compound | Diol | Isocyanate | Melting point (°C) |
|---|---|---|---|
| XLVI | $CF_3$ | Methyl | 202.6 to 204.2 |
| XLVII | " | Ethyl | 196.9 to 200.1 |
| XLVIII | $C'F_2$ | Methyl | Does not melt |
| XLIX | " | Ethyl | Does not melt |
| L | " | Phenyl | No melting point |

TABLE VIII

The following Table VIII lists the thermochromic polyacetylenes of this invention, by Roman numeral as listed in Table II, illustrating the individual transition temperature and the reversible color change occurring at that temperature. In general, the thermochromic transition can be repeated many times with no apparent degradation of the crystals. These tests were carried out visually on a Fisher-Johns melting point apparatus.

TABLE VIII

| Thermochromic polyacetylene according to Roman numeral in Table II | Temp. of transition | Color change |
|---|---|---|
| I | 150°—160°C | gold to red |
| II | 125°—135° | gold to red |
| III | 195°C | gold to red |
| IVA | 190°—195°C | dark gold to red |
| IVB | 120°—170°C | gold to red |
| V | 120°—160°C | purple to red |
| VI | 130°—140°C | black brown to bright orange |
| VII | 180°—185°C | black brown to red |
| VIII* | 135°C | green gold to red |
| IXA* | 110°C | green gold to red |
| IXB* | 137°C | red to yellow |
| X | 175°—180°C | green gold to red |
| XI | 180°—200°C | green gold to red |
| XII | 165°—175°C | green gold to red |
| XIII | 137°—150°C | green gold to red |
| XIV* | 195°C | green gold to orange |
| XV* | 185°C | green gold to red orange |
| XVI | 175°—180°C | green gold to red |
| XVII | 170°—180°C | dark gold to red |
| XVIII | 207°—227°C | green gold to red brown |
| XIX | 185°—195°C | dark gold to red |
| XX | 195°—205°C | dark gold to red |
| XXI | 185°—195°C | dark gold to red |
| XXII | 110°—115°C | blue purple to brown red |
| XXIII | 95°—100°C | red brown to orange brown |

*(Alkoxy)carbonylmethyl diacetylenes of Formula (A) — known per se but not for thermochromic uses — Compounds VIII and XIV are (ethoxy) and IX and XV are (n-butoxy)carbonylmethyl; *n* is 4 for VIII and IX and 3 for XIV and XV. See Patel et al. cited above under Description of the prior art.

TABLE VIII (contd.)

| Thermochromic polyacetylene according to Roman numeral in Table II | Temp. of transition | Color change |
|---|---|---|
| XXIV | 130°—135°C | red brown to orange brown |
| XXV | 95°—100°C | blue to red |
| XXVI | 100°—105°C | blue purple to red purple |
| XXVII | 55°—60°C | blue red to orange red |
| XLI | 95°—100°C | blue to red purple |
| XLII | 65°—70°C | blue purple to red purple |
| XLIII | 100°—105°C | blue to red purple |
| XLIV | 60°—65°C | blue purple to red purple |
| XLV | 85°—90°C | blue to red purple |
| XLVI | 85°—90°C | blue purple to red purple |
| XLVII | 65°—70°C | blue purple to red purple |
| XLVIII | 75°—80°C | blue to red purple |
| XLIX | 65°—70°C | blue purple to red purple |
| L | 115°—120°C | blue to red |
| LI | 55°—60°C | blue to red |
| LII | 65°—70°C | blue purple to red |

Example 55

The partially polymerized acetylenic compounds XXVIII to XXXVIII were tested for thermochromic behavior as follows: Each partially polymerized compound was annealed in a test tube at the following temperatures: —180°C (liquid nitrogen), —78°C (dry ice-acetone mixture), 25°C (room temperature). The colors of the crystals were compared with color tabs from the Munsell Book of Color (MacBeth Color and Photography Division, Kollmargen Corporation, Newburgh, New York, 1973). The following table shows hue symbol numbers for the partially polymerized acetylenic compounds at different temperatures:

TABLE IX

| | Munsell color code | | | |
|---|---|---|---|---|
| Polymer | 25°C | Liquid $N_2$ | Dry ice | 70°C |
| XXVIII | 2.5 R 8/6 | 10 PB 4/8 | 10 PB 7/10 | 10 R 7/10 |
| XXIX | 7.5 PB 5/8 | 7.5 PB 6/10 | 2.5 P 6/6 | 7.5 PB 5/8 |
| XXX | 7.5 PB 4/10 | 7.5 PB 3/10 | 10 P 5/12 | 7.5 PB 4/10 |
| XXXI | 2.5 RP 7/10 | 7.5 PB 6/8 | 5 P 7/8 | 2.5 RP 7/10 |
| XXXII | 5 P 7/8 | 10 PB 7/8 | 10 PB 7/8 | 7.5 P 7/8 |
| XXXIII | 5 PB 6/8 | 2.5 PB 7/6 | 5 PB 6/8 | 7.5 PB 6/10 |
| XXXIV | 2.5 RP 7/10 | 5 P 6/6 | 7.5 P 7/8 | 2.5 RP 7/8 |
| XXXV | 10 PB 6/8 | 2.5 P 8/4 | 5 P 7/8 | 2.5 RP 7/8 |
| XXXVI | 7.5 R 4/12 | 7.5 R 3/6 | 7.5 R 4/6 | 7.5 R 5/12 |
| XXXVII | 7.5 RP 3/4 | 7.6 PB 2.5/4 | 5 P 3/4 | 7.5 RP 4/8 |
| XXXVIII | 7.5 RP 3/6 | 2.5 P 2.5/4 | 2.5 RP 3/4 | 7.5 RP 4/8 |

Example 56

The following thermochromic polyacetylenes were molded into films which were strong and pliable and were useful as temperature-indicator devices. The polyacetylenes are also capable of being incorporated into thermoplastic polymers, such as Halar 300 and useful as temperature-indicators.

A. Thermochromic polydiacetylene XIV was successfully incorporated into a film of Halar 300, (made by Allied Chemical Corporation), by molding at 260°C. The film containing 5% of the polydiacetylene, was black in color. It turned orange color at 196°C upon heating and black upon cooling to room temperature.

The polydiacetylene XIV was molded at 210°C to obtain a film about 0.0762 mm thick. The polydiacetylene film showed a green-gold to orange color transition at 196°C. The film was reasonably strong (the strength was comparable to that of polyethylene film) and was pliable.

B. Thermochromic polydiacetylene XV was molded at 200°C into a thin (about 0.0762 mm) film. The film was green-gold in color at room temperature. Upon heating, the film turned red-orange at about 185°C. The film turned metallic green-gold upon cooling. The film was reasonably strong (strength comparable to that of polyethylene) and was pliable.

The polydiacetylene XV was incorporated into Halar 300, by molding at 260°C. The resulting Halar film (containing 5% of the polydiacetylene) was black in color. It turned orange at 185°C upon heating and reverted to black upon cooling to room temperature.

C. The test for thermochromism of polydiacetylene VIII was carried out visually on a Fisher-Johns melting point apparatus. The polymer crystals turned red-orange from metallic green-gold at 135°C. The crystals turned metallic green-gold with a slightly reddish tint upon cooling to room temperature.

Thermochromic polydiacetylene VIII was molded into film (about 0.0762 mm thick) at 150°C. The film was pliable and dark red in color at room temperature. Upon heating, the film turned light pink at 135°C. Upon cooling, it turned back to dark red.

The thermochromic polydiacetylene VIII was incorporated into Halar 300, by molding at 260°C. The resulting Halar film (containing 5% of the polydiacetylene) was red in color. It turned orange at 135°C upon heating and turned red upon cooling to room temperature.

D. The test for thermochromism of the polydiacetylene IX was also carried out visually on a Fisher-Johns melting point apparatus. The polymer crystals turned red from metallic green gold at 110°C and turned yellow from red at about 137°C. Upon cooling to room temperature, the crystals turned dark red with some green-gold color tint.

The thermochromic polydiacetylene IX was molded into film (about 0.0762 mm thick) at 150°C. The film was pliable and dark red in color. Upon heating, the film turned light pink at 110°C. Upon cooling, it turned dark red.

The thermochromic polydiacetylene IX was incorporated into Halar 300, to form a polymeric film by molding at 260°C. The resulting Halar film (containing 5% of the polydiacetylene) was red in color. It turned light orange at 110°C upon heating and turned red on cooling to room temperature.

The thermochromic polydiacetylene IX was highly soluble in organic polar solvents such as acetone, tetrahydrofuran and chloroform. The polydiacetylene was dissolved in acetone (1 g in 100 mL). A very thin coating (red in color) of the polydiacetylene was obtained by dipping a glass slide in the

solution or by spreading the solution on a polyethylene film and allowing the solvent to evaporate. The coating turned orange at 115°C and yellow at 135°C.

**Claims**

1. A thermochromic polyacetylene composition selected from the group consisting of

(1) polydiacetylenes obtained by polymerizing monomers having the following formula:

(A) $RNHCOO—(CH_2)_n—C{\equiv}C—C{\equiv}C—(CH_2)_n—OOCNHR'$ wherein

(a) n is 4 and R and R′ can be the same or different and are isopropyl, n-octadecyl, linear $C_1—C_4$ p- or m-alkylphenyl, o- or m-chlorophenyl or linear $C_1—C_4$ monochloroalkyl; or
(b) n is 3 and R and R′ can be the same or different and are linear $C_1—C_4$ m-alkylphenyl, or m- or p-chlorophenyl; or
(c) n is 2 and R and R′ can be the same or different and are linear $C_1—C_4$ m alkylphenyl, p-methoxyphenyl or linear $C_1—C_4$ m-alkoxyphenyl;

(2) polyacetylenic network polymers obtained by 1,4-addition of crosslinkable polyacetylenes having one of the following formulas:

(B) $[OOCNH(CH_2)_6—NHCOO(CH_2)_n—C{\equiv}C—C{\equiv}C—(CH_2)_2—C{\equiv}C—C{\equiv}C—(CH_2)_n]_x$

wherein x is greater than 1 and n is an integer from 2—6;

(C) $\{OOCNH—(CH_2)_6—NHCOO(CH_2)_n—[C{\equiv}C—C{\equiv}C—(CH_2)_2]_2C{\equiv}C—C{\equiv}C—(CH_2)_n\}_x$

wherein x is greater than 1 and n is 3; or copolymers formed from monomers of the above formula (B), and formula (C) wherein n is 3;

(3) partially polymerized acetylenic compounds containing from about 0.1 to about 50 weight percent polymer obtained by polymerizing acetylenic compositions having one of the above formulas (A) or (C), or one of formulas D, E or F below with 50 percent to 99.9 percent of said compounds being unreacted monomer; formulas (A) and (C) being rewritten below as (A′) and (C′):

(A′) $RNHCOO(CH_2)_n—C{\equiv}C—C{\equiv}C—(CH_2)n—OOCNHR'$ wherein

(a) n is 4 and R and R′ are p-chlorophenyl or p-bromophenyl;
(b) n is 3 and R and R′ can be the same or different and are linear $C_4—C_{18}$ alkyl, linear $C_1—C_4$ o-alkoxyphenyl or linear $C_1—C_4$ o-alkylphenyl; or
(c) n is 2 and R and R′ can be the same or different and are linear $C_2—C_{18}$ alkyl, or m-chlorophenyl; or
(d) n is 1 and R and R′ can be the same or different and are linear $C_6—C_{18}$ alkyl;

(C′) $\{OOCNH—(CH_2)_6—NHCOO(CH_2)_n—[C{\equiv}C—C{\equiv}C—(CH_2)_2]_2C{\equiv}C—C{\equiv}C—(CH_2)_n\}_x$

wherein x is large and is n is 2 or 4;

(D) $RNHCOO—(CH_2)_n—C{\equiv}C—C{\equiv}C—(CH_2)_2—C{\equiv}C—C{\equiv}C—(CH_2)_n—OOCNHR'$

wherein
(a) n is 4 and R and R′ can be the same or different and are linear $C_1—C_{18}$ alkyl;
(b) n is 3 and R and R′ can be the same or different and are linear $C_1—C_{18}$ alkyl;
(c) n is 2 and R and R′ can be the same or different and are linear $C_2—C_{18}$ alkyl;

(E) $RNHCOO—(CH_2)_n—[C{\equiv}C—C{\equiv}C—(CH_2)_2]_2—C{\equiv}C—C{\equiv}C—(CH_2)_n—OOCNHR'$

wherein
(a) n is 4 and R and R′ can be the same or different and are linear $C_2—C_{18}$ alkyl;
(b) n is 3 and R and R′ can be the same or different and are linear $C_1—C_{18}$ alkyl;
(c) n is 2 and R and R′ can be the same or different and are linear $C_1—C_{18}$ alkyl or phenyl;

(F) $[HO—(CH_2)_n—C{\equiv}C—C{\equiv}C—(CH_2)_2—C{\equiv}C]_2$

wherein n is 2 or 3.

2. The partially polymerized acetylenic compounds of claim 1 containing from about 0.5 to about 10 percent by weight of polymer.

3. A composition of claim 1 wherein R is the same as R′.

4. A composition of claim 1 obtained by polymerizing a monomer of formula (A) wherein n is 4 and R is isopropyl and R′ is n-octadecyl.

5. A composition of claim 1 wherein the thermochromic polyacetylene is substantially crystalline.

6. A composition of claim 1 wherein the thermochromic polyacetylene possesses a hysteresis transition temperature which is at least about 5°C below its thermochromic transition temperature.

7. A process for producing thermochromic polyacetylenes of claim 1 which comprises the steps of (1) irradiating a monomer of formula (A), or (B), or (C) (where n is 3) with at least about $1 \times 10^3$ J/kg of gamma radiation at room temperature, or its equivalent at other temperatures; and (2) extracting out unpolymerized monomer from the irradiated polyacetylene.

8. The process of claim 7 wherein the monomer of formula (A), (B) or (C) is irradiated with gamma radiation of a dosage of at least $5 \times 10^4$ J/kg at room temperature, or its equivalent at other temperatures, whereby a relatively low hysteresis transition temperature is obtained.

9. A process for producing thermochromic partially polymerized acetylenic compositions of claim 1 containing from about 0.1 to about 50 weight percent polymer which comprises thermally annealing a monomer of formulas (A'), (C'), (D), (E) or (F); or irradiating such monomer with ultraviolet radiation or gamma radiation up to a dosage of about $5 \times 10^4$ J/kg at room temperature, or its equivalent at other temperatures; wherein monomers (A') and (C') have n equal to 2 or 4.

10. A device for measuring and optionally for recording temperature comprising a substrate having deposited thereon at least one thermochromic polyacetylene formed by polymerizing an acetylenic compound of claim 1.

11. A device for displaying indicia comprising a substrate having deposited thereon at least one thermochromic polyacetylene, formed by polymerizing an acetylenic compound of claim 1 in the form of a symbol.

12. The device of either claim 10 or 11 wherein the thermochromic polyacetylene is a composition of claim 1 and possesses a hysteresis transition temperature which is at least about 5°C below its thermochromic transition temperature.

13. In a process for recording and thereafter erasing images, wherein a thermochromic layer on a substrate is exposed to a laser beam thereby forming an image by the resulting heating of the thermochromic layer above its thermochromic transition temperature, the improvement which comprises forming said layer from at least one thermochromic polyacetylene, formed by polymerizing an acetylenic compound of claim 1, said thermochromic polyacetylene possessing a hysteresis transition temperature which is at least about 5°C below its thermochromic transition temperature; and maintaining said layer, after exposure, between its thermochromic transition temperature and its hysteresis transition temperature to store the image while recording the same; and thereafter cooling said layer below the hysteresis transition temperature to erase the image.

14. The process of claim 13 wherein the thermochromic polyacetylene is a composition of claim 1 and possesses a hysteresis transition temperature which is at least about 10°C below its thermochromic transition temperature.

**Patentansprüche**

1. Thermochrome Polyacetylenzusammensetzung, ausgewählt aus der Klasse bestehend aus

(1) Polydiacetylenen, die erzeugt werden durch die Polymerisation von Monomeren der folgenden Formel:

(A) $RNCOO—(CH_2)_n—C \equiv C—C \equiv C—(CH_2)_n—OOCNHR'$, in der

(a) n gleich 4 ist und R und R' gleich oder verschieden sein können und Isopropyl, n-Octadecyl, lineares $C_1—C_4$-p- oder m-Alkylphenyl, o- oder m-Chlorphenyl oder lineares $C_1—C_4$-Monochloroalkyl sind, oder

(b) n gleich 3 ist und R und R' gleich oder verschieden sein können und lineares $C_1—C_4$-m-Alkylphenyl oder m- oder p-Chlorphenyl sind, oder

(c) n gleich 2 ist und R und R' gleich oder verschieden sein können und lineares $C_1—C_4$-m-Alkylphenyl p-Methoxyphenyl oder lineares $C_1—C_4$-m-Alkoxyphenyl sind

(2) vernetzte polyacetylenische Polymere, die erzeugt werden durch die 1,4-Anlagerung von vernetzbaren Polyacetylenen der folgenden Formeln:

(B) $[OOCNH(CH_2)_6—NHCOO(CH_2)_n—C \equiv C—C \equiv C—(CH_2)_2—C \equiv C—C \equiv C—(CH_2)_n]_x$

in der x größer als 1 und n eine ganze Zahl von 2 bis 6 ist,

(C) $[OOCNH—(CH_2)_6—NHOOCNH(CH_2)_n—[C \equiv C—C \equiv C(CH_2)_2]_2C \equiv C—C \equiv C—(CH_2)_n]_x$

in der x größer als 1 und n gleich 3 ist, oder Copolymere aus Monomeren der vorstehenden Formel (B) und der Formel (C) mit n gleich 3,

(3) teilpolymerisierten acetylenischen Verbindungen, die etwa 0,1 bis etwa 50 Gew.-% Polymer enthalten, das durch die Polymerisation von acetylenischen Zusammensetzungen einer der vorstehenden Formeln (A) oder (C) oder einer der nachstehenden Formeln (D), (E) oder (F) erhalten

wird, wobei 50 bis 99,9 Prozent der genannten Verbindungen nichtumgesetztes Monomeres sind und die Formeln (A) und (B) nachstehend in Form der Formeln (A') und (C') umgeschrieben sind:

(A') $RNHCOO(CH_2)_n—C≡C—C≡C—(CH_2)_n—OOCNHR'$, in der

(a) n gleich 4 ist und R und R' p-Chorphenyl oder p-Bromphenyl sind;
(b) n gleich 3 ist und R und R' gleich oder verschieden sein können und lineares $C_4—C_{18}$-Alkyl, lineares $C_1—C_4$-o-Alkoxyphenyl oder lineares $C_1—C_4$-o-Alkylphenyl sind, oder
(c) n gleich 2 ist und R und R' gleich oder verschieden sein können und lineares $C_2—C_{18}$-Alkyl oder m-Chlorphenyl sind, oder
(d) n gleich 1 ist und R und R' gleich oder verschieden sein können und lineares $C_6—C_{18}$-Alkyl sind;

(C') $\{OOCNH—(CH_2)_6—NHOOC(CH_2)_n—[C≡C—C≡C—(CH_2)_2]_2C≡C—C≡C—(CH_2)_n\}_x$

in der x groß und n gleich 2 oder 4 ist

(D) $RNOOC—(CH_2)_n—C≡C—C≡C—(CH_2)_2—C≡C—C≡C—(CH_2)n—OOCNHR'$, in der

(a) n gleich 4 ist und R und R' gleich oder verschieden sein können und lineares $C_1—C_{18}$-Alkyl sind;
(b) n gleich 3 ist und R und R' gleich oder verschieden sein können und lineares $C_1—C_{18}$-Alkyl sind,
(c) n gleich 2 ist und R und R' gleich oder verschieden sein können und lineares $C_2—C_{18}$-Alkyl sind,

(E) $RNHCOO—CH_2)_n—[C≡C—C≡C—(CH_2)_2]_2—C≡C—C≡C—(CH_2)_n—OOCNHR'$, in der

(a) n gleich 4 ist und R und R' gleich oder verschieden sein können und lineares $C_2—C_{18}$-Alkyl sind,
(b) n gleich 3 ist und R und R' gleich oder verschieden sein können und lineares $C_1—C_{18}$-Alkyl sind,
(c) n gleich 2 ist und R und R' gleich oder verschieden sein können und lineares $C_1—C_8$-Alkyl oder Phenyl sind,

(F) $[HO—(CH_2)_n—C≡C—C≡C—(CH_2)_2—C≡C]_2$ in der n gleich 2 oder 3 ist.

2. Teilpolymerisierte acetylenische Verbindungen nach Anspruch 1, dadurch gekennzeichnet, daß sie etwa 0,5 bis etwa 10 Gew.% Polymeres enthalten.

3. Zusammensetzung nach Anspruch 1, dadurch gekennzeichnet, daß R und R' gleich sind.

4. Zusammensetzung nach Anspruch 1, dadurch gekennzeichnet, daß sie durch Polymerisation eines Monomeren der Formel (A) erzeugt worden ist, in der n gleich 4 ist und R die Bedeutung Isopropyl und R' die Bedeutung n-Octadecyl hat.

5. Zusammensetzung nach Anspruch 1, dadurch gekennzeichnet, daß das thermochrome Polyacetylen im wesentlichen kristallin ist.

6. Zusammensetzung nach Anspruch 1, dadurch gekennzeichnet, daß das thermochrome Polyacetylen eine Hysterese-Übergangstemperatur besitzt, die mindestens 5°C unter seiner Thermochromie-Umschalgtemperature liegt.

7. Verfahren zum Erzeugen von thermochromen Polyacetylenen nach Anspruch 1, dadurch gekennzeichnet, daß (1) ein Monomer der Formel (A) oder (B) (in der n gleich 3 ist) mit Gammastrahlung in einer Dosierung von mindestens etwa $1 \cdot 10^3$ J/h bei Zimmertemperatur oder in einer äquivalenten Dosierung bei anderen Temperaturen bestrahlt wird und (2) das nichtpolymerisierte Monomere aus dem bestrahlten Polyacetylen extrahiert wird.

8. Verfahren nach Anspruch 7, dadurch gekennzeichnet, daß das Monomere der Formel (A), (B) oder (C) mit Gammastrahlung in einer Dosierung von mindestens $5 \cdot 10^4$ J/h bei Zimmertemperatur oder in einer äquivalenten Dosierung bei anderen Temperaturen bestrahlt und dadurch eine relativ niedrige Hysterese-Umschalgtemperatur erhalten wird.

9. Verfahren zum Erzeugen von thermochromen teilpolymerisierten acetylenischen Zusammensetzungen nach Anspruch 1 mit einem Gehalt von etwa 0,1 bis etwa 50 Gew.% Polymerem, dadurch gekennzeichnet, daß ein Monomeres der Formeln (A'), (C'), (D), (E) oder (F) wärmebehandelt oder mit Ultraviolettstrahlung oder mit Gammastrahlung in einer Dosierung von bis zu $5 \cdot 10^4$ J/h bei Zimmertemperatur oder in einer äquivalenten Dosierung bei anderen Temperaturen bestrahtl wird, wobei bei den Monomeren (A') und (C') n gleich 2 oder 4 ist.

10. Vorrichtung zum Messen und gegebenenfalls zum Aufzeichnen der Temperatur mit einem Substrat, auf dem das mindestens ein thermochromes Polyacetylen aufgetragen ist, das durch die Polymerisation einer acetylenischen Verbindung nach Anspruch 1 gebildet worden ist.

11. Einrichtung zum Anzeigen von Symbolen mit einem Substrat, auf dem in Form eines Symbols mindestens ein thermochromes Polyacetylen aufgetragen ist, das durch die Polymerisation einer acetylenischen Verbindung nach Anspruch 1 gebildet worden ist.

12. Einrichtung nach Anspruch 10 oder 11, dadurch gekennzeichnet, daß das thermochrome Polyacetylen eine Zusammensetzung nach Anspruch 1 ist und eine Hysterese-Übergangstemperatur besitzt, die mindestens 5°C unter seiner Thermochromie-Umschalgtemperatur liegt.

13. Verfahren zum Aufzeichnen und darauffolgenden Löschen von Bildern, in dem eine thermochrome Schicht auf einem Substrat miteinem Laserstrahl belichtet und dabei infolge der Erwärmung der thermochromen Schicht über ihre Thermochromie-Umschalgtemperatur ein Bild

erzeugt wird, dadurch gekennzeichnet, daß die genannte Schicht aus mindestens einem thermochromen Polyacetylen erzeugt wird, das seinerseits durch die Polymerisation einer acetylenischen Verbindung nach Anspruch 1 erzeugt worden ist, wobei das thermochrome Polyacetylen eine Hysterese-Umschalgtemperatur besitzt, die mindestens etwa 5°C unter seiner Thermochromie-Umschalgtemperatur liegt, und daß die genannte Schicht nach ihrer Belichtung auf einer Temperatur zwischen ihrer Thermochromie-Umschalgtemperatur und ihrer Hysterese-Umschalgtemperatur gehalten und daher das Bild während seiner Aufzeichnung gespeichert wird, und daß die genannte Schicht danach zum Löschen des Bildes unter ihre Hysterese-Übergangstemperatur abgekühlt wird.

14. Verfahren nach Anspruch 13, dadurch gekennzeichnet, daß das thermochrome Polyazetylen eine Zusammensetzung nach Anspruch 1 ist und eine Hysterese-Umschalgtemperatur besitzt, die mindestens etwa 10°C unter seiner Thermochromie-Umschalgtemperatur liegt.

**Revendications**

1. Composition de polyacéthylène thermochromique choisie dans le groupe se composant de:

(1) des polyacétylènes obtenus en polymérisant des monomères ayant la formule:

(A) $RNHCOO(CH_2)_n—C{\equiv}C—C{\equiv}C—(CH_2)_n—OOCNHR'$ où

(a) n vaut 4 et R et R′ peuvent être les mêmes ou différents et sont des groupes isopropyle, n-octadécyle, p- ou m-alkyl en $C_1$—$C_4$ linéaire phényle, o- ou m-chlorophényle ou monochloroalkyle en $C_1$—$C_4$ linéaire; ou
(b) n vaut 3 et R et R′ peuvent être les mêmes ou différents et sont les groupes m-alkyl en $C_1$—$C_4$ linéaire phényle, ou m- ou p-chlorophényle; ou
(c) n vaut 2 et R et R′ peuvent être les mêmes ou différents et sont des groupes m-alkyl en $C_1$—$C_4$ linéaire phényle, p-méthoxyphényle ou m-alcoxy en $C_1$—$C_4$ linéaire phényle;

(2) des polymères à réseau polyacétyléniques obtenus par addition en 1,4 de polyacétylènes réticulables ayant une des formules suivantes:

(B) $[OOCNH(CH_2)_6—NHCOO(CH_2)_n—C{\equiv}C—C{\equiv}C—(CH_2)_2—C{\equiv}C—C{\equiv}C—(CH_2)_n]_x$

où x est supérieur à 1 et n est un nombre entier de 2—6;

(C) $\{OOCNH—(CH_2)_6—NHCOO(CH_2)_n—[C{\equiv}C—C{\equiv}C—(CH_2)_2]_2C{\equiv}C—C{\equiv}C—(CH_2)_n\}_x$

où x est supérieur à 1 et n vaut 3; ou des copolymères formés à partir des monomères de formule (B) cidessus, et de formule (C) où n vaut 3;

(3) des composés acétyléniques partiellement polymérisés contenant environ 0,1 à environ 50% en poids de polymère obtenu en polymérisant des compositions acétyléniques ayant une des formules ci-dessus (A) ou (C) ou une des formules D, E ou F ci-dessous, 50% à 99,9% des composés étant formés de monomère n'ayant pas réagi; les formules (A) et (C) étant réécrites ci-dessous sous forme (A) et (C′);

(A′) $RNHCOO(CH_2)_n—C{\equiv}C—C{\equiv}C—(CH_2)_n—OOCNHR'$ où

(a) n vaut 4 et R et R′ sont le groupe p-chlorophényle ou p-bromophényle;
(b) n vaut 3 et R et R′ peuvent être les mêmes ou différents et sont des groupes alkyles en $C_4$—$C_{18}$ linéaires, o-alcoxy en $C_1$—$C_4$ linéaire phényle ou o-alkyl en $C_1$—$C_4$ linéaire phényle; ou
(c) n vaut 2 et R et R′ peuvent être les mêmes ou différents et sont des groupes alkyles en $C_2$—$C_{18}$ linéaires, ou m-chlorophényle; ou
(d) n vaut 1 et R et R′ peuvent être les mêmes ou différents et sont des groupes alkyles en $C_6$—$C_{18}$;

(C′) $\{OOCNH—(CH_2)_6—NHCOO(CH_2)_n—[C{\equiv}C—C{\equiv}C—(CH_2)_2]_2C{\equiv}C—C{\equiv}C—(CH_2)_n\}_x$

où x est grand et n vaut 2 ou 4;

(D) $RNHOOC—(CH_2)_n—C{\equiv}C—C{\equiv}C—(CH_2)_2—C{\equiv}C—C{\equiv}C—(CH_2)_n—OOCNHR'$ où

(a) n vaut 4 et R et R′ peuvent être les mêmes ou différents et sont des groupes alkyles en $C_1$—$C_{18}$ linéaires;
(b) n vaut 3 et R et R′ peuvent être les mêmes ou différents et sont des groupes alkyles en $C_1$—$C_{18}$ linéaires;
(c) n vaut 2 et R et R′ peuvent être les mêmes ou différents et sont des groupes alkyles en $C_2$—$C_{18}$ linéaires;

(E) $RNHCOO—(CH_2)_n—[C{\equiv}C—C{\equiv}C—(CH_2)_2]_2—C{\equiv}C—C{\equiv}C—(CH_2)_n—OOCNHR'$ où

(a) n vaut 4 et R et R′ peuvent être les mêmes ou différents sont des groupes alkyles en $C_2$—$C_{18}$ linéaires;

(b) n vaut 3 et R et R′ peuvent être les mêmes ou différents et sont des groupes alkyles en $C_1$—$C_{18}$ linéaires

(c) n vaut 2 et R et R′ peuvent être les mêmes ou différents et sont des groupes alkyles en $C_1$—$C_{18}$ linéaires ou phényles;

(F) $[HO—(CH_2)_n—C{\equiv}C—C{\equiv}C—(CH_2)_2—C{\equiv}C]_2$ où n vaut 2 ou 3.

2. Composés acétyléniques partiellement polymérisés selon la revendication 1, contenant environ 0,5 à environ 10% en poids de polymère.

3. Composition selon la revendication 1, dans laquelle R est le même que R′.

4. Composition selon la revendication 1, obtenue en polymérisant un monomère de formule (A) où n vaut 4 et R est le groupe isopropyle et R′ est le groupe n-octadécyle.

5. Composition selon la revendication 1, dans laquelle le polyacétylène thermochromique est sensiblement cristallin.

6. Composition selon la revendication 1, dans laquelle le polyacétylène thermochromique possède une température de transition d'hystérésis qui est au moins 5°C en-dessous de sa température de transition thermochromique.

7. Procédé de production de polyacétylènes thermochromiques selon la revendication 1, qui consiste (1) à irradier un monomère de formule (A) ou (B) ou (C) (où n vaut 3) avec au moins environ $1\times10^3$ J/kg de rayonnement gamma à la température ambiante ou son équivalent à d'autres températures; et (2) à extraire le monomère non polymérisé à partir du polyacétylène irradié.

8. Procédé selon la revendication 7, dans lequel le monomère de formule (A), (B) ou (C) est irradié avec un rayonnement gamma à une dose d'au moins $5\times10^4$ J/kg à la température ambiante, ou son équivalent à d'autres températures, et de ce fait on obtient une température de transition d'hystérésis relativement faible.

9. Procédé pour produire des compositions acétyléniques partiellement polymérisées thermochromiques selon la revendication 1, contenant 0,1 à environ 50% en poids de polymère, qui consiste à recuire thermiquement un monomère de formules (A′), (C′), (D), (E) ou (F); ou à irradier ce monomère avec un rayonnement ultraviolet ou un rayonnement gamma jusqu'à une dose d'environ $5\times10^4$ J/kg à la température ambiante, ou son équivalent à d'autres températures, ou les monomères (A′) et (C′) ont n égal à 2 ou 4.

10. Dispositif pour mesurer et de manière facultative pour enregistrer la température, comprenant un substrat sur lequel est déposé au moins un polyacétylène thermochromique formé en polymérisant un composé acétylénique de la revendication 1.

11. Dispositif pour présenter des indices ou des signes comprenant un substrat sur lequel est déposé au moins un polyacétylène thermochromique, formé en polymérisant un composé acétylénique de la revendication 1 sous la forme d'un symbole.

12. Dispositif selon la revendication 10 ou 11, dans lequel le polyacétylène thermochromique est une composition de la revendication 1 et possède une température de transition d'hystérésis qui est au moins environ 5°C en-dessous de sa température de transition thermochromique.

13. Dans un procédé pour enregistrer et ensuite effacer des images, où une couche thermochromique sur un substrat est exposée à un faisceau de laser en formant ainsi une image par le chauffage résultant de la couche thermochromique au-dessus de sa température de transition thermochromique, le perfectionnement qui consiste à former la couche à partir d'au moins un polyacétylène thermochromique, formé en polymérisant un composé acétylénique de la revendication 1, ce polyacétylène thermochromique possédant une température de transition d'hystérésis qui est au moins environ 5°C en-dessous de sa température de transition thermochromique, et à maintenir la couche, après exposition, entre sa température de transition thermochromique et sa température de transition d'hystérésis pour emmagasiner l'image tout en l'enregistrant, et ensuite à refroidir la couche en-dessous de la températur de transition d'hystérésis pour effacer l'image.

14. Procédé selon la revendication 13, dans lequel le polyacétylène thermochromique est une composition de la revendication 1, et possède une température de transition d'hystérésis qui est au moins environ 10°C endessous de sa température de transition thermochromique.

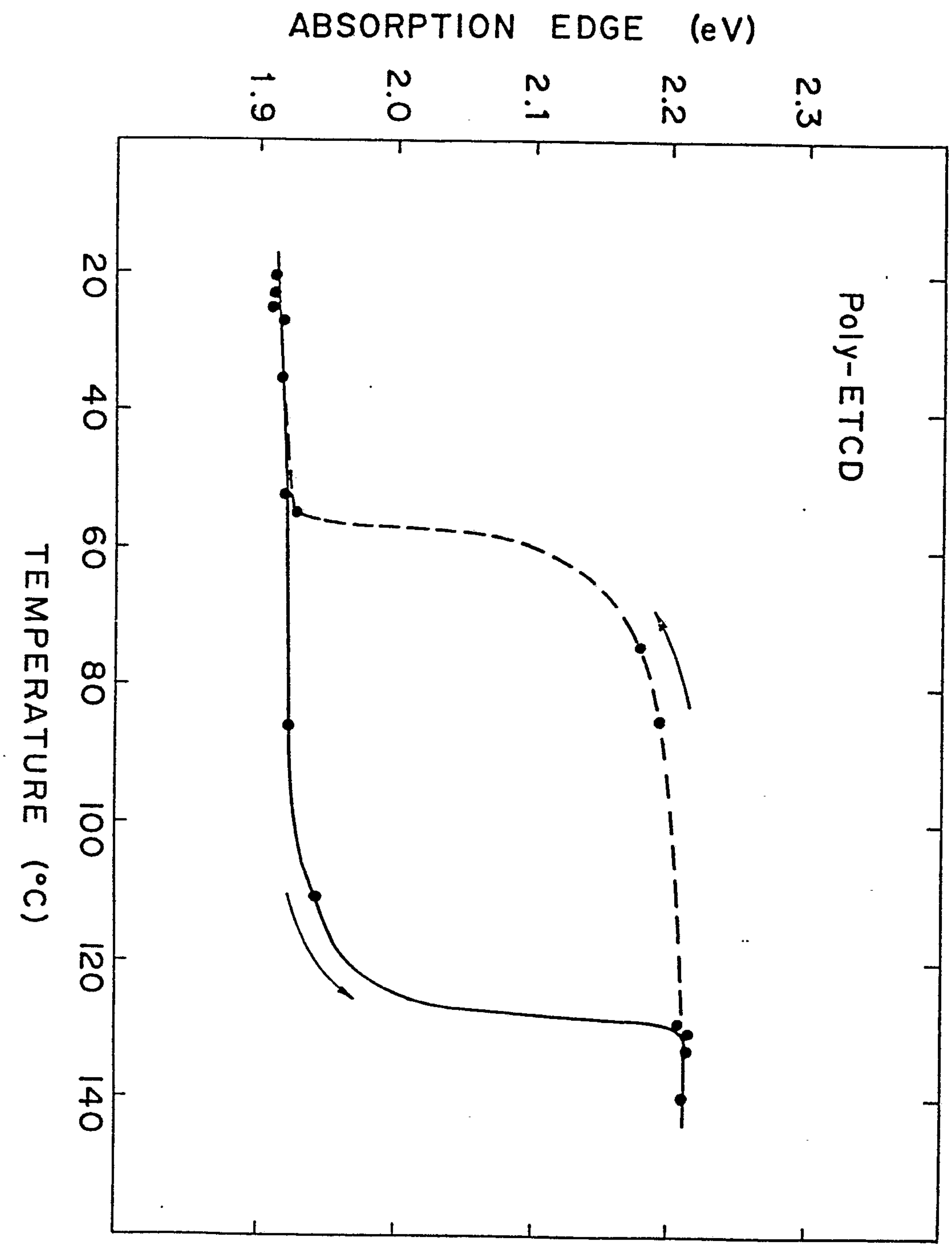
ABSORPTION EDGE (eV)
1.9
2.0
2.1
2.2
2.3
Poly-ETCD
20
40
60
80
100
120
140
TEMPERATURE (°C)